# EUROPEAN PATENT SPECIFICATION

(11) **EP 3 993 942 B1**
(45) Date of publication and mention of the grant of the patent: **18.02.2026**
(21) Application number: 20736959.6
(22) Date of filing: 01.07.2020
(51) Int. Cl.: B23K 10/02, B23K 10/00, B33Y 10/00, B33Y 30/00, B33Y 50/02, B23K 9/04, B23K 26/342, B23K 26/04

(54) **STANDOFF DISTANCE MONITORING AND CONTROL FOR DIRECTED ENERGY DEPOSITION ADDITIVE MANUFACTURING SYSTEMS**
ABSTANDSÜBERWACHUNG UND STEUERUNG FÜR GENERATIVE FERTIGUNGSSYSTEME MIT GERICHTETER ENERGIEABLAGERUNG
SURVEILLANCE ET COMMANDE DE DISTANCE D'ÉCARTEMENT POUR SYSTÈMES DE FABRICATION ADDITIVE PAR DÉPÔT D'ÉNERGIE DIRIGÉE

(30) Priority: 03.07.2019 US 201962870289 P
(43) Date of publication of application: 11.05.2022
(73) Proprietor: Norsk Titanium AS, 3514 Hønefoss (NO)
(72) Inventor: BURLA, Avinash, 3514 Hønefoss (NO); FORBORD, Jon, 3514 Hønefoss (NO); REZAPOUR, Ehsan, 3514 Hønefoss (NO); ALMEIDA, Pedro, 1383 Asker (NO)
(74) Representative: Acapo Onsagers AS
(86) International application number: PCT/EP2020/068534
(87) International publication number: WO 2021/001429

(56) References cited:
- JP-A- 2009 241 142
- US-A- 5 326 955
- US-A1- 2017 001 253
- US-A1- 2018 072 000
- US-A1- 2019 004 497

## Description

### BACKGROUND

### Technical Field

Generally, this disclosure relates to directed energy deposition additive manufacturing systems. More particularly, this disclosure relates to standoff distance monitoring and control.

### Discussion of Related Art

A rapid plasma deposition (RPD^{™}) additive manufacturing system can host an inert gas environment (e.g. noble gas) containing a wire (e.g. metal) and a plasma torch. The RPD^{™} additive manufacturing system additively manufactures a workpiece (e.g. aerostructure) based on the plasma torch controllably directing a plasma arc at the wire and the plasma arc melting the wire to form the workpiece, layer-by-layer, as the workpiece is controllably moved past the plasma torch or vice versa within the inert gas environment.

During such operations, a standoff distance (e.g. along vertical axis) is maintained between the plasma torch and the workpiece. The standoff distance determines the plasma arc resistance and thereby the plasma arc power and characteristics (e.g. for constant plasma arc current supplied by constant current power supply). Although larger standoff distances produce higher arc voltages, at least some energy transferred to the workpiece is reduced due to a radiative and convective heat transfer along the plasma arc. The standoff distance statically ranges between a lower limit given by equipment set-up (e.g. physical equipment constraints) and an upper limit given by reduced power input to the workpiece (e.g. improper wire melting).

From JP 2009 24 1142, on which the preamble of the independent claims is based, it is known a plasma arc build-up welding equipment and method for simultaneously satisfying efficiency, soundness of a weld zone and low dilution rate, where the plasma arc build-up welding equipment 1 which generates a plasma arc A between an electrode 55 and a base metal 2, and applies build-up welding to the surface of the base metal 2 by supplying a welding wire 27 to a plasma arc A, is provided with a pair of heating electrodes 74 which are brought into slidable contact with the welding wire 27, and a wire heating power source 75

which preliminarily performs resistance heating before supplying a current to the pair of the heating electrodes 74, and supplying the welding wire 27 to the plasma arc A.

There are various factors which may lead to standoff distance deviations. Some of such factors include substrate distortion, uneven deposit surface (e.g. due to wire movement), uneven workpiece height step, workpiece features (e.g. joints, ends, intersections), and other complex process variations. Although the standoff distance can be indirectly controlled based on voltage measurements by maintaining a constant voltage, this technique is technologically disadvantageous due to various factors. Some of such factors include voltage measurements that are very noisy and highly sensitive to variations (e.g. gas flow, electrode mechanical or material configuration, equipment variations, or workpiece geometric variations). Resultantly, controlling the standoff distance indirectly based on the voltage measurements introduces standoff distance errors that cumulatively add up over workpiece layers, thereby negatively affecting workpiece quality.

### SUMMARY

Accordingly, disclosed herein are various technologies for directed energy deposition (e.g. RPD^{™}) additive manufacturing systems that enable standoff distance monitoring and control, which can be responsive, dynamic, and/or in real-time. These technologies can use a standoff distance measurement system, such as a laser triangulation system or a laser line scanner (LLS), to real-time monitor, read, or interrogate a workpiece (e.g. bead profile, workpiece shape) or a substrate on which the workpiece is positioned, as the workpiece is moved (e.g. via substrate) past a directed energy source (e.g. plasma torch), or vice versa. Note that other optical measurement techniques, such as time of flight, confocal, chromatic confocal, interferometry, shape from shading, depth from focus/defocus, Lidar, alone or in combination with illuminations, such as fringe projection, pattern projection (e.g. line, multi-line, multi-spot) of different wavelengths, such as infrared, visible, UV, X-Ray, and non-optical methods, such as sonar, ultrasonic readers or interrogators, can be supplementally or alternatively used to real-time monitor, read, or interrogate the workpiece (e.g. bead profile, workpiece shape) or the substrate on which the workpiece is positioned, as the workpiece is moved (e.g. via substrate) past the directed energy source (e.g. plasma torch), or vice versa. These technologies can use a feedback controller to responsively and dynamically control the standoff distance (e.g. raise or lower directed energy source relative to workpiece or vice versa) in real-time based on data from the standoff distance measurement system, such as the laser triangulation system or the laser line scanner (although other optical measurement techniques, such as time of flight, confocal, chromatic confocal, interferometry, shape from shading, depth from focus/defocus, Lidar, alone or in combination with illuminations, such as fringe projection, pattern projection (e.g. line, multi-line, multi-spot) of different wavelengths, such as infrared, visible, UV, X-Ray, and non-optical methods, such as sonar, ultrasonic readers or interrogators, can be supplementally or alternatively used. Therefore, these technologies eliminate at least some technical limitations associated with an industry standard of using voltage-based measurements. Moreover, these technologies can enable automatic measurement, evaluation, and responsive and dynamic control in real-time of the standoff distance during additive manufacturing of workpieces (e.g. aerostructures, marine structures, vehicular parts, medical devices, firearms, cutlery) via metals (e.g. titanium, aluminum) or metal alloys (e.g. Ti6Al4V, Inconel variants, etc.) using plasma arcs (e.g. RPD^{™}) or other forms of directed energy.

An advantage of these technologies is to have an objective inline/in-situ automated system for standoff distance responsive and dynamic control in real-time that provides at least some consistent plasma arc (or other forms of directed energy) characteristics, such as power, pressure, shape, and energy distribution across machines and over time, reduces scrap rate, enables early detection of unacceptable deviations, shortens part development cycle, and others. Also, these technologies enable standoff distance control that is more robust, faster, and objective compared to a subjective human operator manual adjustment where such adjustment can be based on visual feedback. Likewise, these technologies enable standoff distance control that is usually more precise and faster compared to a robotic arm welding because of automated standoff distance control based on movement (e.g. vertical) of the directed energy source relative to the substrate, or vice versa. Note that these technologies can be used with any type of motion system (e.g. computer numerical control, robot manipulators).

Additional features and advantages of these technologies will be set forth in a detailed description which follows, and in part will be apparent from a detailed description below, or can be learned by practice of this disclosure. Various objectives and other advantages of this disclosure will be realized and attained by a structure particularly pointed out in the detailed description and claims hereof as well as in a set of appended drawings.

To achieve these and other advantages and in accordance with a purpose of this disclosure, as embodied and broadly described, a directed energy deposition additive manufacturing system according to claim 1 is disclosed.

To achieve these and other advantages and in accordance with a purpose of this disclosure, as embodied and broadly described, a method for additive manufacturing according to claim 26 is disclosed.

It is to be understood that both the foregoing general description and the following detailed description are exemplary and explanatory and are intended to provide further explanation of claims, as further recited below.

### DESCRIPTION OF DRAWINGS

The set of appended drawings, which are included to provide a further understanding of this disclosure and are incorporated in and constitute a part of this specification, illustrate embodiments of this disclosure and together with the detailed description serve to explain various principles of this disclosure.

In the set of appended drawings:
FIG. 1 shows an embodiment of a directed energy deposition additive manufacturing system inclusive of a laser line scanner reading a substrate and a geometric profile of a workpiece on the substrate in accordance with this disclosure.
FIG. 2 shows an embodiment of a directed energy deposition process flow in accordance with this disclosure.
FIG. 3 shows an embodiment of a directed energy deposition process flow in accordance with this disclosure.
FIG. 4 shows an embodiment of a substrate supporting a workpiece in accordance with this disclosure.
FIG. 5 shows an embodiment of a block diagram of a directed energy deposition additive manufacturing system inclusive of a laser line scanner reading a geometric profile of a workpiece on a substrate in accordance with this disclosure.
FIG. 6 shows an embodiment of a diagram for a laser line scanner system in accordance with this disclosure.
FIG. 7 shows an embodiment of a diagram for a laser line scanner system in accordance with this disclosure.
FIG. 8 shows an embodiment of a substrate supporting a workpiece and a set of information relevant for data validation and grid spacing in accordance with this disclosure.
FIG. 9 shows an embodiment of a diagram for a control block in accordance with this disclosure.
FIG. 10 shows an embodiment of a diagram for a control block in accordance with this disclosure.
FIG. 11 shows an embodiment of a plurality of scenarios for standoff monitoring and control in accordance with this disclosure.
FIG. 12 shows an embodiment of a margin around a plurality of edges of a substrate where there is an increased risk of collision with tool head in accordance with this disclosure.
FIG. 13 shows an embodiment of a technique for minimizing a risk of collision or avoiding a collision with a clamp clamping a substrate in accordance with this disclosure.

### DETAILED DESCRIPTION OF ILLUSTRATED EMBODIMENTS

This disclosure is now described more fully with reference to the set of accompanying drawings, in which some embodiments of this disclosure are shown. This disclosure can, however, be embodied in many different forms and should not be construed as necessarily being limited to the embodiments disclosed herein. Rather, these embodiments are provided so that this disclosure is thorough and complete, and fully conveys various concepts of this disclosure to skilled artisans. Reference will now be made in detail to the embodiments of this disclosure, and examples of which are illustrated in the set of appended drawings.

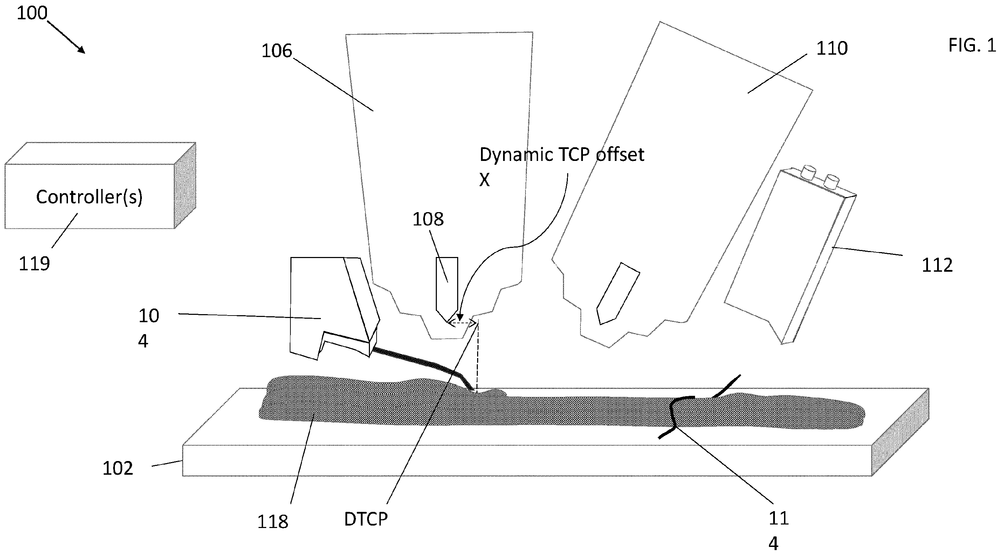

FIG. 1 shows an embodiment of a directed energy deposition additive manufacturing system inclusive of a laser line scanner reading a substrate and a geometric profile of a workpiece on the substrate in accordance with this disclosure. In particular, a directed energy deposition (e.g. RPD^{™}) additive manufacturing system 100 includes a workpiece 118 and a substrate 102 supporting the workpiece 118. Note that the workpiece 118 may not be mounted on or positioned on or resting on the substrate 102 (e.g. another workpiece functions as substrate 102). For example, the workpiece 118 does not have to be a plate (substrate 102) and can be, for example, a forged part, a printed part, or part made with any other technology (e.g. additive manufacturing, subtractive manufacturing). For example, starting a deposition on a plate (substrate 102) is not a must and is optional. For example, another workpiece or a part can function as the substrate 102.

The directed energy deposition additive manufacturing system 100 includes a controller 119, a wire source 104 (connected to a wire feeding system) controlled (e.g. wired, wireless, waveguide) by the controller 119, a directed energy source 106 (e.g. plasma torch) controlled by the controller 119 (e.g. wired, wireless, waveguide), a directed energy source 110 (e.g. plasma torch) controlled by the controller (e.g. wired, wireless, waveguide), and a laser line scanner (LLS) 112 (or another form of a standoff distance measurement system) controlled by the controller 119 (e.g. wired, wireless, waveguide).

The controller 119 can be a programmable logic controller (PLC), an industrial PC (IPC), or others. For example, the PLC can be a master PLC. The directed energy source 106 can be a primary directed energy source, whereas the directed energy source 110 can be a secondary directed energy source. The LLS 112 can include a laser source generating a laser beam and an optical camera reading a plurality of reflections from the laser beam. The directed energy source 106 hosts an electrode 108. The LLS 112, which can be pre-calibrated, projects a laser pattern 114 onto the workpiece 118 and the substrate 102. The laser pattern 114 can be projected via the laser source. The substrate 102 is moving in a 3-dimensional space.

Various components of the directed energy deposition additive manufacturing system 100 can be omitted, replaced, or supplemented. For example, the LLS 112 can be supplemented or replaced by other optical measurement techniques, such as time of flight, confocal, chromatic confocal, interferometry, shape from shading, depth from focus/defocus, Lidar, alone or in combination with illuminations, such as fringe projection, pattern projection (e.g. line, multi-line, multi spot, random spots, random patterns, gradient patterns) of different wavelengths, such as infrared, visible, UV, X-Ray, and non-optical methods such as sonar, ultrasonic readers or other interrogators. Likewise, the directed energy source 110 or the directed energy source 106 hosting the electrode 108 can be supplemented or replaced by other energy output devices (e.g. flame torches) or forms of directed energy (e.g. thermal, acoustic, electrical). Similarly, the directed energy source 110 can be omitted (can be optionally included). Moreover, the wire source 104 can be supplemented or replaced by other material feeders (e.g. nozzles).

The directed energy source 106 hosting the electrode 108 can be a primary energy source generating a directed energy (e.g. plasma arc) toward the substrate 102 in operational proximity of the wire source 104. The directed energy can be transferred from the electrode 108 to the wire from the wire source 104 or the directed energy can optionally be transferred from the electrode 108 to the substrate 102 or both simultaneously (e.g. using multiple plasma arcs). The directed energy source 106 can be stationary or movable (e.g. horizontally, vertically) relative to the wire source 104or vice versa. The wire source 104 can be stationary or movable (e.g. horizontally, vertically) relative to the directed energy source 106, or vice versa. The substrate 102 can be stationary or movable (e.g. horizontally, vertically) relative to the wire source 104 or the directed energy source 106 or vice versa. For example, the substrate 102 can be moving in a direction along a horizontal axis relative to the wire source 104 and the directed energy source 106. When included, the directed energy source 110 can include an electrode (or another energy output support device), which can be a preheater electrode (or another energy output support device) preheating the substrate 102, which may be relatively cool, before additive manufacturing of the workpiece 118 begins via the directed energy source 106 and the wire source 104. When included, the directed energy source 110 can be positioned between the LLS 112 and the directed energy source 106 along the horizontal axis.

The substrate 102 is moving in the 3-dimensional space relative to the wire source 104, the directed energy source 106, the directed energy source 110, and the LLS 112. The wire source 104 sources a wire (e.g. metals, titanium, aluminum, steel, etc. metal alloys, Ti6Al4V, Inconel variants) over the substrate 102 such that the directed energy source 106 hosting the electrode 108 generates the plasma arc that melts the wire over the substrate 102, while the substrate 102 is moving in the 3-dimensional space, such that a plurality of droplets are formed from the wire being melted via the directed energy (e.g. plasma arc) such that the droplets are deposited, positioned, layered, cascaded, or fall onto the substrate 102 or pre-loaded workpiece 118 in order to additively form or additively extend the workpiece 118, layer-by-layer. For example, the workpiece 118 does not have to be a plate (substrate 102) and can be, for example, a forged part, a printed part, or part made with any other technology (e.g. additive manufacturing, subtractive manufacturing). For example, starting a deposition on a plate (substrate 102) is not a must and is optional. For example, another workpiece or a part can function as the substrate 102.

Since the workpiece 118 has a geometric profile, which can be vertically or horizontally varying or geometrically contoured or vertically or horizontally contoured, the LLS 112 projects the laser pattern 114 onto the geometric profile of the workpiece 118, which may or may not be supported by the substrate 102 such that the LLS 112 optically illuminates the geometric profile of the workpiece 118 and/or the substrate 102, which can be in at least some bottom layers of the substrate 102. The LLS 112 can then employ the camera to read the reflections from the laser patter 114. At some point in time, the substrate 102 can become a part of the workpiece 118 when the substrate 102 is used as a base of the workpiece 118 (e.g. print on forge). For example, the workpiece 118 does not have to be a plate (substrate 102) and can be, for example, a forged part, a printed part, or part made with any other technology (e.g. additive manufacturing, subtractive manufacturing). For example, starting a deposition on a plate (substrate 102) is not a must and is optional. For example, another workpiece or a part can function as the substrate 102.

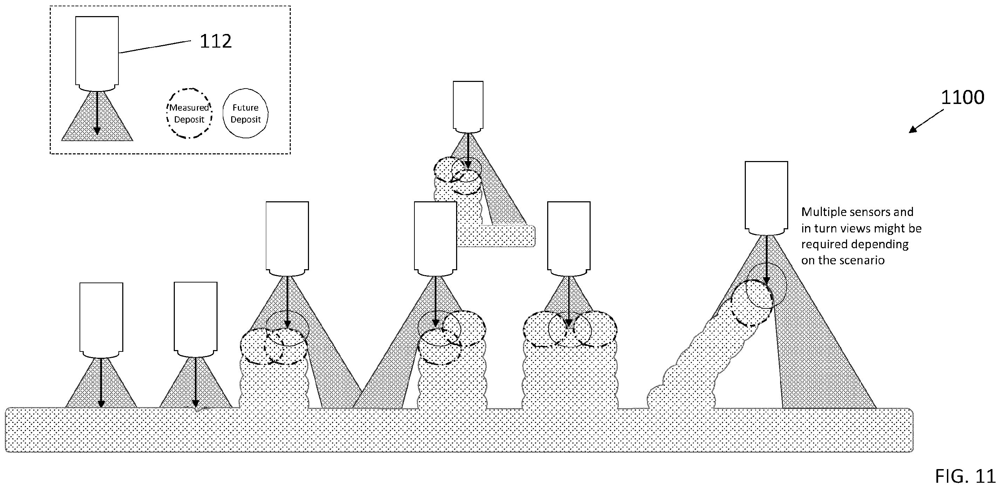

More than one LLS 112 can be used (e.g. optically read substrate 102 and/or geometric profile of the workpiece 118 from another view or angle). For example, the laser patterns 114 can be perpendicular to each other, parallel to each other, or L-shaped, or U-shaped, or O-shaped, patterns can be single line, multi-line, single spot, multi spot, random spots, random patterns, pulsed, non-pulsed, or others. For example, more than one LLS 112 can be used depending on different scenarios, different read offsets both along X and Y from a leading tip of the electrode 108 might be required when measuring the standoff distance (also see FIG. 11). Moreover, when the directed energy deposition additive manufacturing system 100 involves plasma arcs, since the plasma arcs may have an impact on quality of measurements of the LLS 112, then at least some measurements or calibrations of the LLS 112 can be made when plasma arcs are off to avoid measurement inaccuracies.

Within the directed energy deposition additive manufacturing system 100, a standoff distance can be measured between a tool center point and a point on the workpiece 118 along the vertical axis. The tool center point (TCP) can both be defined statically based on tool mechanics (e.g. tip of the electrode 108, or point at end at origin of directed energy source (e.g. plasma arc)) or offsetted dynamically (e.g. computed in real-time based on process variables, such as wire speed, arc angle, deflection, shape in a scenario where necessary to offset point of interest to section where droplets meet workpiece 118 rather than under electrode tip). Without loss of generality, this point is referred interchangeably as TCP or DTCP hence forth.

For instance, the standoff distance can be measured inclusively less than about 100 millimeters, 90 millimeters, 80 millimeters, 70 millimeters, 60 millimeters, 50 millimeters, 40 millimeters, 30 millimeters, 20 millimeters, 10 millimeters, and inclusive of any values in between (e.g. about every 1, 2, 3, 4, 5, 6, 7, 8, or 9 millimeters) although values greater than 100 millimeters (e.g. about 125, 150, 200, 225, 250, 300 millimeters or more) are possible inclusive of various orders of magnitude greater e.g. centimeters, decimeters, meters). The workpiece 118 and or substrate 102 can be moved in the 3d space using an X-axis (e.g. length), a Y-axis (e.g. depth), a Z-axis (e.g. height), a C-Axis (e.g. rotation XY plane), a B-Axes Rotation (e.g. XZ or YZ planes), without loss of generality, the vertical axis can be referred to as the Z-axis. The geometric profile of the workpiece 118 can vary along the X-axis, the Y-axis, or the Z-axis, whether gradually or suddenly. When the directed energy deposition additive manufacturing system 100 avoids the electrode 108 or supplements the electrode 108 with another energy output device (e.g. flame torch), then the standoff distance can be measured between the DTCP (e.g. central portion) of the energy output device and the workpiece 118 along the vertical axis. For example, the DTCP can be vertically above and in a same Z plane as an electrode tip or other energy support device above a point where at least some droplets land.

The standoff distance can be dynamically maintained within various defined limits to achieve consistent plasma arcing conditions (e.g. voltage, power, temperature distribution) from the electrode 108. As such, the directed energy deposition additive manufacturing system 100 includes a standoff distance monitoring and control system, as further described below, that enables an automatic measurement and responsive and dynamic control in real-time of the standoff distance via a vertical movement of the electrode 108 (e.g. up, down, toward workpiece 118 or substrate 102, away from workpiece 118 or substrate 102) relative to an extracted point from a section on the substrate 102 below the TCP/DTCP or an extracted point from a section on the geometric profile of the workpiece 118 below the TCP/DTCP. For example, the directed energy source 106, together with the electrode 108, can vertically move relative to the extracted point from the section on the substrate 102 below the TCP/DTCP or the extracted point from the section on the geometric profile of the workpiece 118 below the TCP/DTCP as the substrate 102 moves the workpiece 118 in the 3D space. Note that a vice versa configuration is possible (e.g. substrate 102 is vertically moved up or down relative to directed energy source 106 or electrode 108).

The directed energy deposition additive manufacturing system 100 runs an RPD^{™} program (e.g. executable code, list of numerical control (NC) values, markup code, delimited text, populated spreadsheet) which among others sets various parameters of the standoff distance monitoring and control system, such as standoff distance set point, set value trajectories, control modes, control enable, measurement offsets, read offsets, or others. The standoff distance monitoring and control system responsively and dynamically in real-time maintains the standoff distance between the TCP/DTCP and a highest point on the workpiece 118 below the TCP/DTCP, based on the geometric profile of the workpiece 118, or a lowest point of the workpiece 118, based on the geometric of the workpiece 118, or an average of the highest and lowest points of the workpiece 118, based on the geometric profile of the workpiece 118, within a specific region centered around various specified read offsets. The standoff distance monitoring and control system is able to dynamically and responsively maintain in real-time or dynamically and responsively adjust in real-time the standoff distance based on the LLS 112 optically reading (e.g. camera reading laser beam reflections) the substrate 102 and the workpiece 118, via the laser pattern 114 laterally extending along or traversing the substrate 102 and the workpiece 118, and then vertically moving the electrode 108 relative to the substrate 102 or the geometric profile of the workpiece 118 dynamically responsive to the geometric profile of the workpiece 118 satisfying or not satisfying a predefined threshold (e.g. set numerical value) associated with the standoff distance (e.g. inclusively less than about 100 millimeters, 90 millimeters, 80 millimeters, 70 millimeters, 60 millimeters, 50 millimeters, 40 millimeters, 30 millimeters, 20 millimeters, 10 millimeters, and inclusive of any values in between (e.g. about every 1, 2, 3, 4, 5, 6, 7, 8, or 9 millimeters) although values greater than 100 millimeters (e.g. about 125, 150, 200, 225, 250, 300 millimeters or more) are possible inclusive of various orders of magnitude greater e.g. centimeters, decimeters, meters). Note that vice versa configuration is possible (e.g. substrate 102 is vertically moved relative to directed energy source 106). For example, the laser pattern 114 can be perpendicular to a bead cross-section forming the workpiece 118 and a central portion of the laser pattern 114 can be a point of interest for a height measurement. Note that the laser pattern 114 can be projected dynamically below the TCP/DTCP at a point of interest for distance measurement, at a fixed position ahead of the TCP, or at a fixed position behind the TCP. In a scenario, where the laser pattern 114 is not exactly below the TCP/DTCP, the extracted standoff distance data need to be attached with workpiece position information and to be stored (e.g. buffered in grid), so that a standoff control system can retrieve at least some values from a storage (e.g. memory) when the TCP/DTCP is at the point of interest to maintain the standoff distance.

The standoff distance monitoring and control system uses the LLS 112 (or another laser based triangulation system), which is mounted such that the directed energy source 110 is positioned between the LLS 112 and the directed energy source 106 along the horizontal axis, to optically measure the standoff distance and, if necessary, then responsively and dynamically in real-time cause a positioning system or a mover (e.g. motor, engine, actuator, mechanical linkage, gear mechanism, pulley mechanism, hydraulic mechanism, pneumatic mechanism) to vertically move the electrode 108 along the Z-axis (e.g. up, down) relative to the substrate 102 or the workpiece 118. This functionality enables the mover dynamically and responsively keep, maintain, or adjust in real-time the standoff distance via a control function which runs on a controller (e.g. PLC, IPC) of the directed energy deposition additive manufacturing system 100. For example, the PLC can be a master PLC. Note that a vice versa configuration is possible (e.g. substrate 102 is vertically moved by mover relative to directed energy source 106).

Note that the directed energy deposition additive manufacturing system 100 can be embodied as disclosed in US Patent Application 15/206163 and US Patents 7301120, 7326377, 9346116, and 9481931, all of which are hereby fully incorporated by reference herein for all purposes. For example, the directed energy deposition additive manufacturing system 100 can receive a file of a design of the workpiece 118, such as a computer-aided design (CAD) file or others, and a spool of the wire via the wire source 104, such as the wire including titanium or others, and produce the workpiece 118, which can be aerospace-grade or others, based on a specific workpiece geometry, as extracted from the file of the design of the workpiece 118. For example, the directed energy deposition additive manufacturing system 100 can include a chamber filled with an inert gas, such as argon, helium, xenon, krypton, or combinations thereof. As such, the substrate 102, the wire source 104, the directed energy source 106, the electrode 108, the directed energy source 110, the laser line scanner 112, the laser pattern 114, and the workpiece 118 can be positioned within the chamber.

In one mode of operation, the standoff distance can be a distance between the DTCP to the workpiece 118 along the vertical direction. The standoff distance is kept within defined limits to achieve consistent arcing conditions. The standoff monitoring and control system enables automatic measurement and control of the standoff distance. Note that an RPD^{™} program defines various parameters of the directed energy deposition additive manufacturing system 100 (e.g. standoff distance set point, control modes, control enable, measurement offsets, read offsets). The directed energy deposition additive manufacturing system 100 then keeps the standoff distance between the DTCP and a highest or a lowest point on the workpiece 118 within a specific region centered around some specified read offsets. The directed energy deposition additive manufacturing system 100 uses the LLS 112 mounted in front of the electrode 108 to measure the standoff distance and uses the mover to keep the standoff distance with a help of a control function which runs on a master logic controller of the directed energy deposition additive manufacturing system 100.

In one mode of operation, the directed energy deposition additive manufacturing system 100 can be configured for standoff monitoring and control in layer 0 (measurements are to be made on the substrate) and based on a small average distance (around about 0-10mm in length) at start of a string before deposition. The directed energy deposition additive manufacturing system 100 can be configured for standoff monitoring and control over an entire deposition length of strings, either with arc on or by scanning when returning to deposit a next string (without major impact on the part deposition schedule or process). The directed energy deposition additive manufacturing system 100 can be configured for inline shape monitoring and standoff estimation. This can be done based on a model of the bead/string including overlaps and laser measurements, while providing a user interface to monitor and find deviations from model and log the entire shape of the deposited strings.

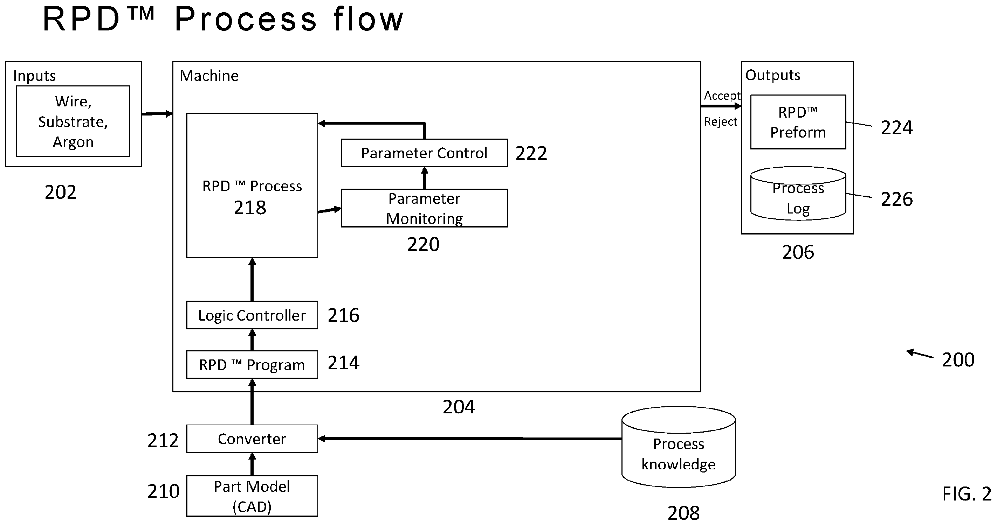

FIG. 2 shows an embodiment of a directed energy deposition process flow in accordance with this disclosure. In particular, a directed energy deposition process 200 includes a plurality of inputs 202 (e.g. wire, substrate, noble gas) being input into a directed energy deposition (e.g. RPD^{™}) additive manufacturing machine 204 which in response outputs a plurality of outputs 206 inclusive of a workpiece 224 and a process machine readable log 226 (e.g. data structure, file). Also, the directed energy deposition additive manufacturing machine 204 receives an RPD^{™} program 214 (e.g. NC commands, executable code, list of numerical values, markup code, delimited text, populated spreadsheet) from a graphical conversion software application 212 that converts a computer-aided design (CAD) file 210 (e.g. multidimensional illustration of object to be additively manufactured) into the RPD^{™} program 214. The graphical conversion software application 212 is linked or in communication with a data source 208 (e.g. database, data structure, software application, function, API) that sources (e.g. wired, waveguide, wirelessly) a set of directed energy deposition (e.g. RPD^{™}) additive manufacturing process knowledge data (e.g. machine settings, deposition parameters) to the graphical conversion software application 212 in order to assist the graphical conversion software application 212 to convert the CAD file 210 into the RPD^{™} program 214.

Within the directed energy deposition additive manufacturing machine 204, the RPD^{™} program 214 is input into a logic controller 216 (e.g. PLC), which controls a directed energy deposition (e.g. RPD^{™}) additive manufacturing process 218 that results in the workpiece 224. Note that the directed energy deposition additive manufacturing machine 204 hosts the logic controller 216. During the directed energy deposition additive manufacturing process 218, the logic controller 216 performs a parameter monitoring process 220 and a parameter control process 222, which assist the directed energy deposition additive manufacturing process 218 to manufacture the workpiece 224.

One of several ways that the parameter monitoring process 220 and the parameter control process 222 assist the directed energy deposition additive manufacturing process 218 may be by employing the standoff distance monitoring and control system, which responsively and dynamically in real-time maintains or controls the standoff distance between the DTCP of the electrode 108 and a highest point of the workpiece 118, based on the geometric profile of the workpiece 118, or a lowest point of the workpiece 118, based on the geometric profile of the workpiece 118, within a specific region centered around various specified read offsets. The standoff distance monitoring and control system is able to dynamically and responsively keep in real-time or dynamically and responsively adjust in real-time the standoff distance based on the LLS 112 optically reading the substrate 102 and the workpiece 118, via the laser pattern 114 laterally extending along or traversing the substrate 102 and the workpiece 118, and then vertically moving (e.g. up, down) the electrode 108 relative to the substrate 102 or the geometric profile of the workpiece 118 dynamically responsive to the geometric profile of the workpiece 118 satisfying or not satisfying a predefined threshold (e.g. numerical value) associated with the standoff distance (e.g. inclusively less than about 100 millimeters, 90 millimeters, 80 millimeters, 70 millimeters, 60 millimeters, 50 millimeters, 40 millimeters, 30 millimeters, 20 millimeters, 10 millimeters, and inclusive of any values in between (e.g. about every 1, 2, 3, 4, 5, 6, 7, 8, or 9 millimeters) although values greater than 100 millimeters (e.g. about 125, 150, 200, 225, 250, 300 millimeters or more) are possible inclusive of various orders of magnitude greater e.g. centimeters, decimeters, meters). As such, the logic controller 216 dynamically and responsively keeps, maintains, or adjusts the standoff distance (e.g. feedback iterative processing) based on the parameter monitoring process 220 and the parameter control process 222.

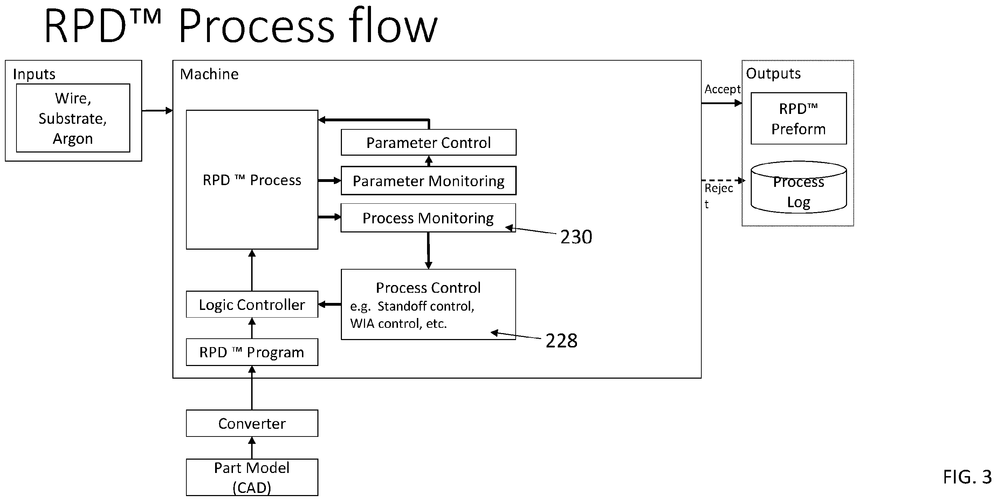

FIG. 3 shows an embodiment of a directed energy deposition process flow in accordance with this disclosure. In particular, the directed energy deposition process 200 shows how a process monitoring technique 230 feeds to a process control technique 228, which in turn feeds the logic controller 216. The process monitoring technique 230 monitors the directed energy deposition additive manufacturing process 218 based on the standoff distance monitoring and control system. For example, the process monitoring technique 230 can include the LLS 112 optically reading the substrate 102 or the varying profile of the workpiece 118 via the laser pattern 114 laterally extending along or traversing the substrate 102 and the workpiece 118.

If the process monitoring technique 230 determines that the standoff distance regulation, control, maintenance, or adjustment, which can be dynamic, responsive, and in real-time, is not feasible (e.g. large standoff distance deviation, unable to correct or timely correct standoff distance deviation), then the process monitoring technique 230 logs an error to the process machine readable log 226 and not additively manufacture the workpiece 118. Otherwise, if the process monitoring technique 230 determines that the standoff distance maintenance or adjustment, which can be dynamic, responsive, and in real-time, is feasible, then the process monitoring technique 230 communicates with the process control technique 228 and timely informs the process control technique of various parameters or characteristics of the directed energy deposition additive manufacturing machine 204 that can be timely adjusted (e.g. standoff distance control, mover movement parameter, wire-in-arc control). Then, the process control technique 228 communicates with the logic controller 216 such that the logic controller 216 can timely act based on the various parameters or characteristics of the directed energy deposition additive manufacturing machine 204 that can be timely adjusted. For example, the logic controller 216 can communicate with a mover (e.g. motor, engine, actuator, mechanical linkage, gear mechanism, pulley mechanism, hydraulic mechanism, pneumatic mechanism) coupled to the electrode 108 such that the mover timely moves (e.g. vertically) the electrode 108 relative to the geometric profile of the workpiece 118 or the substrate 102 along the Z-axis (e.g. up, down). For example, the mover can timely move (e.g. vertically) the electrode in a smooth manner, while avoiding sudden or jerky movements, which may be undesired. This functionality enables the mover dynamically and responsively keep in real-time the standoff distance via the control function running on the logic controller 216.

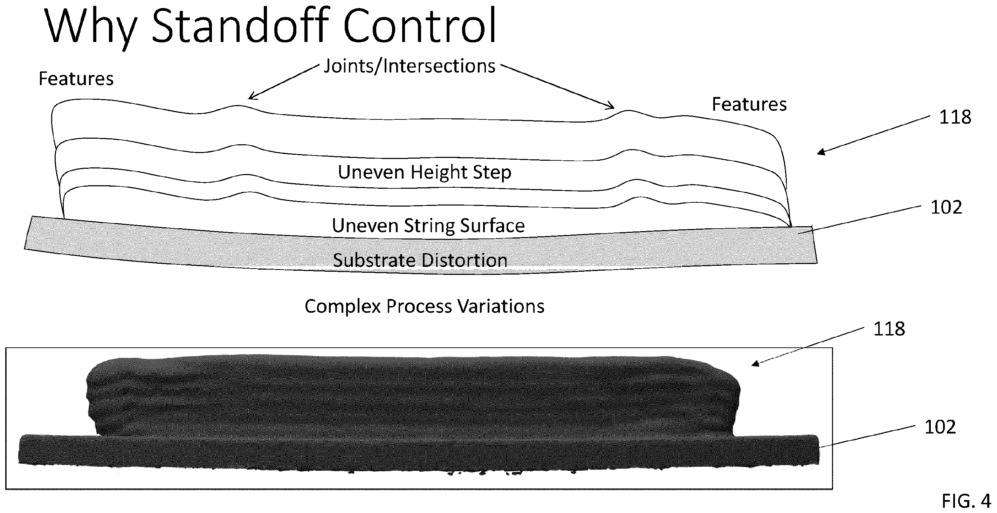

FIG. 4 shows an embodiment of a substrate supporting a workpiece in accordance with this disclosure. In particular, the substrate 102 or the workpiece 118 can be structured, whether longitudinally or laterally, in various ways to warrant controlling of the standoff distance between the electrode 108 and the workpiece 118. For example, the workpiece 118 can have distortion, especially for double sided parts, uneven string surface, uneven height steps, features (e.g. start feature, end feature, joints). Likewise, the substrate 102 can avoid being flat (e.g. longitudinally, laterally) and may have its opposing ends curving upwards toward each other (e.g. longitudinally, laterally). For example, the substrate 102 may not be flat (e.g. rising slope end portion) or the workpiece 118 may having an increasing or decreasing slope (e.g. features) and the LLS 112 can optically read the substrate 102 that is not flat or the increasing or decreasing slope and gradually move (e.g. vertically upwards away from or vertically downward towards the substrate 102 or the workpiece 118) the electrode 108 to dynamically and smoothly maintain the standoff distance, as preset in advance. Such timely and gradual move may be in advance or well before the electrode 108 is positioned over that point (e.g. over which wire melting occurs) of the substrate 102 or the workpiece 118, otherwise, may be too late by time that point of the substrate 102 or the workpiece 118 is positioned under the electrode 108 to maintain the standoff distance gradually (e.g. may involve sudden or jerky movements which may be undesired) or at all. Similar processing would apply when the substrate 102 (e.g. decreasing slope end portion) or the workpiece 118 may have a decreasing slope (e.g. features).

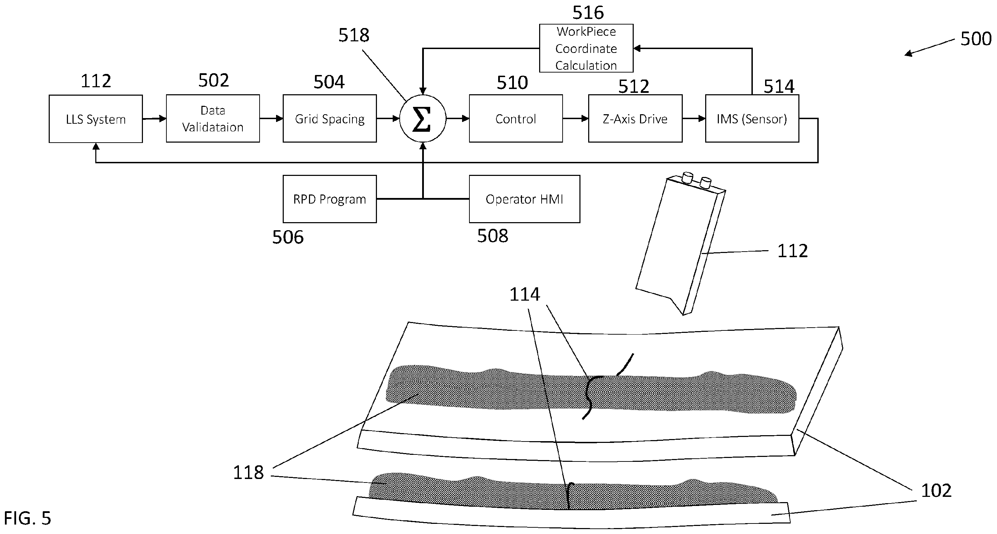

FIG. 5 shows an embodiment of a block diagram of a directed energy deposition additive manufacturing system inclusive of a laser line scanner reading a geometric profile of a workpiece on a substrate in accordance with this disclosure. In particular, a directed energy deposition (e.g. RPD^{™}) additive manufacturing system 500 includes the LLC 112, a data validation logic 502, a grid spacing logic 504, an RPD^{™} program 506, an operator human machine interface (HMI) 508, a control logic 510, a Z-axis drive logic 512, an integrated position sensor 514 (e.g. Bosch Integrated Measuring System (IMS) version), a workpiece-coordinate-system (WCS) logic 516, and a processor 518 (e.g. single core, multicore, PLC, circuit, printed circuit board).

The RPD^{™} program 506 (e.g. executable code, list of numerical control (NC) values, markup code, delimited text, populated spreadsheet) contains various directed energy deposition additive manufacturing system settings (e.g. maintain specified standoff distance) and the operator HMI 508 is programmed to provide a user interface (e.g. analog, digital) that is able to override the RPD^{™} program 506, if necessary, while the RPD^{™} program 506 is being executed on the logic controller 214. This override can be in real-time, while the workpiece 118 is being additively manufactured via the directed energy deposition additive manufacturing system 500.

Once the directed energy deposition additive manufacturing system 500 reads the RPD^{™} program 506 and the operator HMI 508 has not overridden the RPD^{™} program 506, the directed energy deposition additive manufacturing system 500 additively manufactures the workpiece 118 on the substrate 102 via the electrode 106 directing the plasma arc at the wire being sourced from the wire source 104, while the substrate 102 is moving in the 3-dimensional space relative to the wire source 104, the directed energy source 106, the directed energy source 110, and the LLS 112. The wire source 104 sources (e.g. unspool, feed) the wire (e.g. metal, alloy, titanium, aluminum, steel) over the substrate 102 such that the electrode 108 generates the plasma arc that melts the wire over the substrate 102, while the substrate 102 is moving in the 3-dimensional space, such that the droplets are formed from the wire being melted via the plasma arc (or any other relevant energy source) and such that the droplets are deposited, positioned, layered, cascaded, or fall onto the substrate 102 in order to additively form the workpiece 118, layer-by-layer. Since the workpiece 118 has the geometric profile, the LLS 112 outputs the laser pattern 114 over the substrate 102 and the geometric profile of the workpiece 118 such that the LLS 112 optically reads the substrate 102 and the geometric profile of the workpiece 118 and generates a set of readings (e.g. workpiece profile, workpiece height, workpiece width) accordingly. The set of readings can be filtered, saturated, and smoothed, as further explained below.

The LLS 112 feeds the set of readings into the data validation logic 502 (e.g. hardware circuit, software function, API) which compares (e.g. serially, concurrently) the set of readings from the LLS 112 with a set of expected values for that workpiece 118 in order to validate the set of readings. The set of expected values can be sourced from a data structure (e.g. array) populated based on a user input from the operator HMI 508. For example, comparing the set of readings from the LLS 112 with the set of expected values for that workpiece 118 can include filtering the set of readings based on a set of expected parameters, criteria, ranges, or thresholds for the workpiece 118 or the geometric profile of the substrate 102. If the data validation logic 502 is able to validate the set of readings from the LLS 112, then the data validation logic 502 inputs the set of readings into the grid spacing logic 504 (e.g. hardware circuit, software function, API) which converts the set of readings into an array or grid (e.g. two-dimensional, three-dimensional) corresponding (e.g. dimensionally shaped) to the workpiece 118. The grid spacing logic 504 feeds the array or grid to the control logic 510 (e.g. hardware circuit, software function, API).

The Z-axis drive logic 512 is coupled (e.g. wired, wirelessly, electrically, mechanically) to the mover (e.g. motor, engine, actuator, mechanical linkage, gear mechanism, pulley mechanism, hydraulic mechanism, pneumatic mechanism). As such, the control logic 510 reads the set of readings, while considering how the mover is currently positioned relative to the substrate 102 or the workpiece 118 based on the IMS 514. For example, the directed energy source 106 and the IMS 514 can be track-mounted. For example, the IMS 514 can include a linear position sensor, a linear encoder, a distance sensor, or another sensor, interrogator, or reader that is determine a position thereof. Note that when the directed energy source 106 is track-mounted, then the mover can be track-mounted. Then, the control logic 510 converts that positional information (e.g. Cartesian X/Y coordinates) into a set of workpiece coordinate system (WCS) coordinates (e.g. two dimensional, three dimensional) for the workpiece 118. Since the mover is coupled (e.g. mechanically, electrically) to the electrode 108, the set of WCS coordinates is fed (e.g. serially, concurrently) into the processor 518 which then requests the mover to move (e.g. vertically) the electrode 108 based on the set of WCS coordinates in order to maintain the standoff distance between the workpiece 118 or substrate (layer 0) and the electrode 108 as the substrate 102 with the workpiece 118 is moving relative to the LLS 112 (or vice versa).

In one mode of operation, the laser line scanner 112 measures the geometric profile of the workpiece 118 and the substrate 102 and forms a set of data based on such measuring. The set of data is computationally validated and stored in a X,Y array or grid in a WCS system, which is then used to calculate a distance control deviation value, which takes a set point from the RPD^{™} program 506, an operator override from the operator HMI 508, and a result of a drive position to enable the mover to move (e.g. vertically) and thereby adjust the electrode 108 relative to the geometric profile of the workpiece 118 and the substrate 102.

In one mode of operation, there are several factors which lead to standoff deviations, these include substrate distortion, uneven string surface, uneven height step, joints, features, and other complex process variations as depicted in FIG. 4. Standoff monitoring and control system automates the monitoring and control using a laser distance measurement scanner and a control system, as shown in FIG. 5. The LLS 112 system block is responsible to capture, filter and extract distance of the workpiece 118 in laser coordinate system, data validation block validates the data from the laser, converts to work piece coordinate system resamples it and stores in a data array (in work piece coordinates). The control block uses this data, setpoint from the program, and the feedback from the drive position sensor (e.g. IMS) to control the Z-Axis for maintaining the standoff distance at set point.

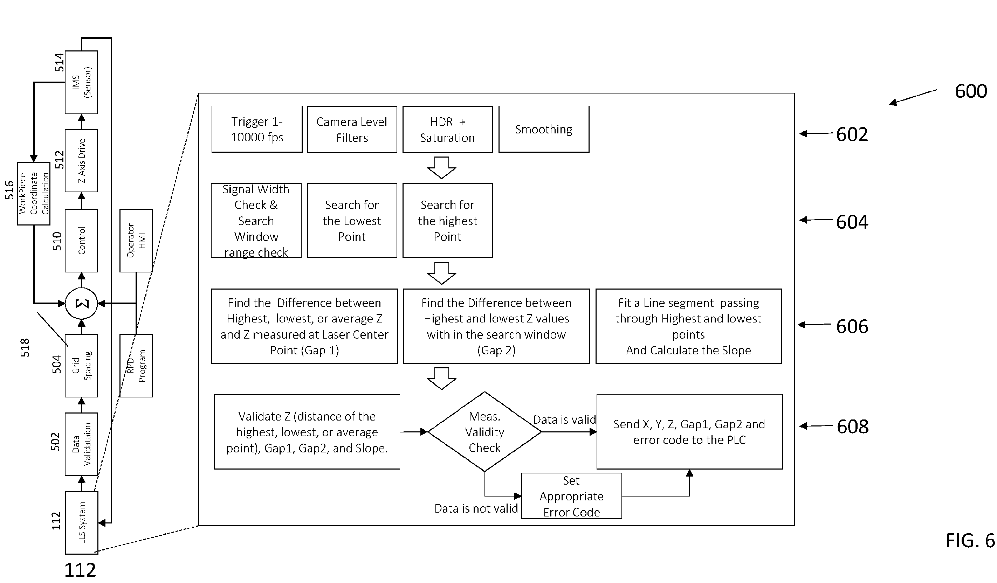

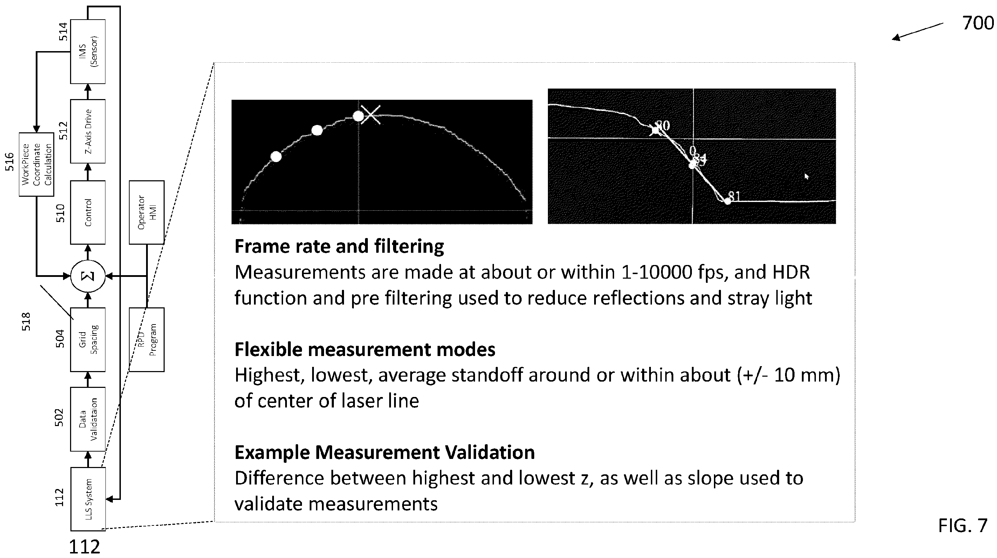

FIG. 6 shows an embodiment of a diagram for a laser line scanner system in accordance with this disclosure. FIG. 7 shows an embodiment of a diagram for a laser line scanner system in accordance with this disclosure. In particular, the LLS 112 performs, enables to be performed, or causes to be performed a set of operations 600. The set of operations 600 includes a set 602, a set 604, a set 606, and a set 608, as exemplified by a diagram 700.

The set 602 relates of ensuring that data from the LLS 112 is proper, as exemplified by the diagram 700. For example, if the wire source 104 sources the wire that include a metal or a metal alloy that is reflective, then the LLS 112 can have at least some optical readings that may be distorted due to at least some undesired or unforeseen reflections from the metal or the metal alloy, especially when the electrode 106 directs the plasma arc at the wire and results or introduces other optical distortions. As such, the set 602 involves control of read frames per second, camera level filters, high dynamic range (HDR) image processing, image saturation processing, image smoothing, and other related image processing or data preprocessing operations. Note that the substrate 102 can be pre-processed to reduce luster or shine in order to reduce optical distortions or deviations at substrate level (e.g. in layers 0,1 and 2).

Likewise, the set 604 involves determining various measurements (e.g. data meeting expectations, minimizing outliers) of the substrate 102 and the geometric profile of the workpiece 118 relative to the substrate 102 based on data from the set 602, as exemplified by the diagram 700. For example, these measurements can include a laser pattern width, a timing value, a lowest point (e.g. extracted valley) of the geometric profile of the workpiece 118 relative to the substrate 102, a highest point (e.g. extracted peak) of the geometric profile of the workpiece 118 relative to the substrate 102, and others.

Similarly, the set 606 involves determinations of a plurality of peak-valley-average height workpiece gaps, workpiece profile slopes, and other related height, width, length determinations based on data from the set 604, as exemplified by the diagram 700. For example, the set 606 can include determining a gap 1 (e.g. 80 to 84 of Fig. 7) based on finding a height difference between (a) a peak (e.g. highest) of the workpiece 118 relative to the substrate 102 at that time point, (b) a valley (e.g. lowest) of the workpiece 118 relative to the substrate 102 at that time point, or (c) an average height of the workpiece 118 relative to the substrate 102 at that time point, and a height at a center point of the laser pattern 114. For example, the set 606 can include determining a gap 2 (e.g. 80 to 81 of Fig. 7) based on finding a height difference between the peak and the valley within at that time point (e.g. search window). For example, the set 606 can include fitting a line segment passing through the peak and the valley and thereby determining a slope of the line segment. Note that these are example functions and this software can do much more data and image processing.

Furthermore, the set 608 involves validating data from the set 606 and communicating with the logic controller 216 based on validation being successful or unsuccessful, as exemplified by the diagram 700. For example, based on the laser pattern 114 from the LLS 112, a distance between the LLS 112 and the substrate 102 or the workpiece 118 can be determined (e.g. based on conversions) and then, based on a set of calibration parameters, can be converted into a standoff distance value (this can be done by the data validation logic 502). For example, the set 608 can include validating a height of the workpiece 118 relative to the substrate 102 (e.g. distance of peak, distance of valley, distance of average point), the gap 1, the gap 2, and a slope of a bead of the workpiece 118 and based on this height being validated, then sending a set of data to the logic controller 216. For example, this can be enabled by looking at a first layer of a deposit, in top layers substrate may or may not be relevant, but distances can be measured in relation to a previously deposited layer. For example, the set of data can include an X-parameter (e.g. length), a Y-parameter (e.g. depth), a Z-parameter (e.g. height), the gap 1, the gap 2, and an error code. As such, the logic controller 216 can cause the mover to move the electrode 108. Otherwise, if this height data is not valid, then an appropriate error message and code is sent to the logic controller 216 based on which the logic controller 216 acts or avoids acting.

The diagram 700 shows that a string formed from melting of the wire from the wire source 104 can be measured (e.g. between 1 frame per second to 10,000 frames per second (fps) or more), and depending on a traverse speed, this will translate to certain samples per millimeter (e.g. at traverse speed of 10 mm/s and frame rate of 100fps samples will be 10 per millimeter) along a deposit. Likewise, HDR and filters are used to suppress the noise and stray light to most possible extent. The LLS system 112 is developed to be flexible, to either return a highest (e.g. peak), lowest (e.g. valley), or average standoff around or within inclusively about +/- 10mm from a center portion of the laser pattern 114. This can be especially useful for features, blocks, and other structural portions of the workpiece 118.

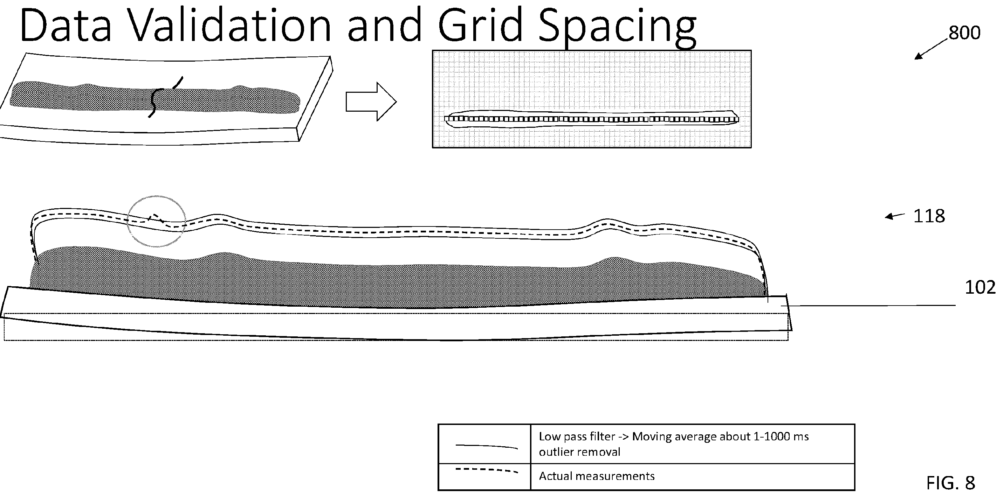

FIG. 8 shows an embodiment of a substrate supporting a workpiece and a set of information relevant for data validation and grid spacing in accordance with this disclosure. In particular, a diagram 800 relates to the data validation logic 502 and the grid spacing logic 504 as sourced from the LLS 112. As such, data obtained from the LLS 112 can be down-sampled and stored based on a position in a workpiece coordinate of the workpiece 118 being deposited as shown in FIG. 8. Further, at least some, many, most, or all measurements can be validated to exclude outliers (e.g. based on expected values). Also, at least some, many, most, or all data is further validated in several layers and stored into an array or grid which has a resolution of inclusively about less than 10, 9, 8, 7, 6, 5, 4, 3, 2, 1 or less than 1 millimeters along the X-axis and the Y-axis. As shown in FIG. 8, tolerances are defined based on a low pass filter being applied (e.g. moving average filter) to remove outliers. Also, at least some, many, most, or all measurements are validated against at least some, many, most, or all measurements from a previous layer. In case data is missing for more than a defined time period (e.g. less than inclusively about 10 seconds, 9 seconds, 8 second, 7 seconds, 6 seconds, 5 second, 4 seconds, 3 seconds, 2 seconds, 1 second, 0.5 seconds, 0.3 seconds) in the previous layer for whatever reason, then the directed energy deposition additive manufacturing system 500 can use a previous layer maximum value to validate data. For example, methods or regimes can be used to cope with missing data and outliers, noise in measurements, corrupted measurements, or others. These forms of processing enable outlier removal and collision avoidance (e.g. object on substrate 102, workpiece 118, clamps on substrate 102). Note that an operator entered average substrate or workpiece height, which can be obtained based on precise substrate height measurements prior to loading, can act as an initial condition for data validation, while also helping to avoid or minimize unnecessary corrections at an end portion of a string (e.g. melted material, melted wire) forming the workpiece 118.

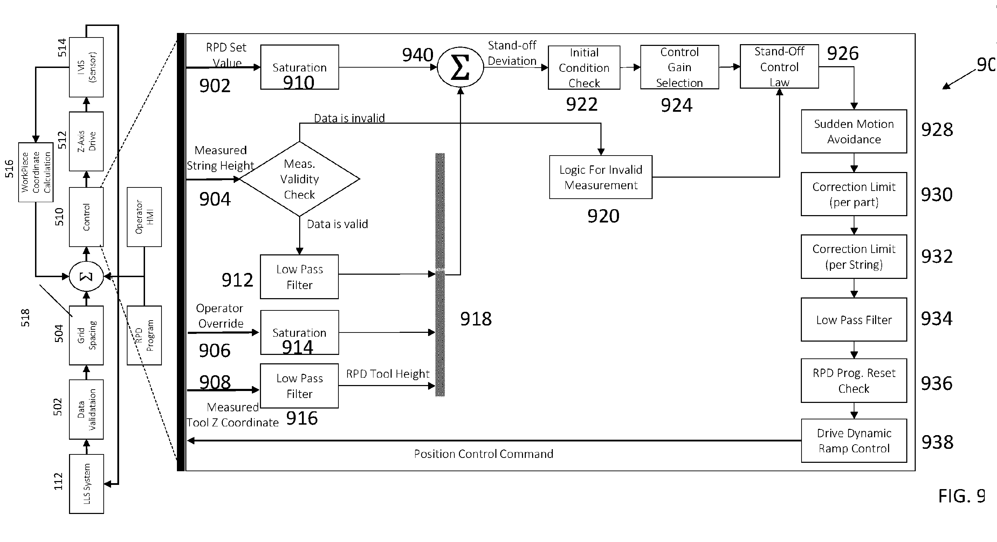

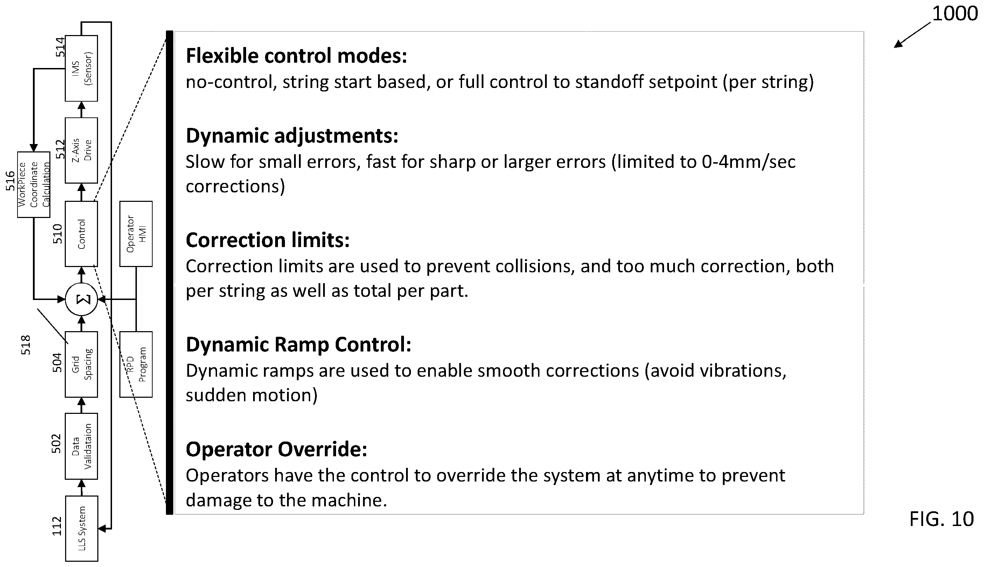

FIG. 9 shows an embodiment of a diagram for a control block in accordance with this disclosure. FIG. 10 shows an embodiment of a diagram for a control block in accordance with this disclosure. In particular, a diagram 900 represents the control logic 510 as implemented via the logic controller 216, as exemplified by a diagram 1000. The diagram 900 has an input 902, an input 904, an input 906, and an input 908. The input 902 is sourced from the RPD^{™} program 506. The input 904 is sourced from the LLS 112. The input 906 is sourced from the operator HMI 508. The input 908 is sourced from the IMS 514. The input 902 is fed into a saturation logic 910 for a selection of a plurality of additive manufacturing values from a set of preset values sourced from the RPD^{™} program 506 for ensuring that at least some commanded stand-off values lie within at least some process specification limits. This result is then fed into a comparison law block 940 to calculate a standoff control deviation for a control law block 926.

The input 904 (e.g. representing string height buildup as expected based on RPD program) is fed into a decision logic to determine whether the input 904 is valid based on a set of expected values. The expected value is based on the RPD^{™} program (e.g. expected string height build up per layer based on defined process variables in RPD program). If yes (e.g. valid), then the input 904 is fed into a low pass filter 912 and then fed into a logical bus or gate 918 within the logic controller 216. If no (e.g. invalid), then the input 904 is fed into a logic for invalid measurement 920, which holds a set of data based on prior valid measurements (up to a certain distance) and feeds the set of data into a standoff-control law logic 926, which determines whether the set of data is compliant with a set of standoff distance control rules (e.g. conditions/instructions to vertically move electrode 108). The input 906 is fed into a saturation logic 914 which verifies whether an operator contribution is within a range specified of allowed contribution defined in a process control specification. and then fed into the logical bus or gate 918. The input 908 is fed into a low pass filter 916, which generates a directed energy source height and then feeds the directed energy source height to the logical bus or gate 918.

The comparison law 940 receives data from the saturation logic 910 and the logical bus or gate 918 and, based on this data, generates a standoff distance deviation value. The processor 940 then performs, causes, or enables to be performed an initial condition check 922 (e.g. validation) on the standoff distance deviation value, a control gain selection 924 on an output of the initial condition check 922, the standoff-control law logic 926 on an output of the control gain selection 924, and then performs a set of condition checks inclusive of a sudden motion avoidance 928, a correction limit per part 930, a correction limit per deposited string 932, a low pass filter 934, an RPD^{™} program reset check 936, and a drive dynamic ramp control 938. As such, these operations enable a set of flexible control modes (e.g. start no-control, string start based, or full control to standoff setpoint (per string)), a set of dynamic adjustments (e.g. slow for small errors, fast for sharp or larger errors), a set of correction limits (e.g. to prevent collisions or too much correction, both per string as well as total per part), a dynamic ramp control (e.g. to enable smooth corrections, avoid vibrations, sudden motion), and an operator override (e.g. operators have control for system override at any time to prevent machine damage).

FIG. 11 shows an embodiment of a plurality of scenarios for standoff monitoring and control in accordance with this disclosure. In particular, a diagram 1100 shows different scenarios where definition of standoff distance varies, whether on substrate profile or bead profile (e.g. highest or lowest or average distance around center point of laser pattern). Note that for accurate or consistent inter-pass temperature measurements a standoff can be set to a first predefined distance no matter what a string standoff might be just for T1 and a second predefined distance for T3, where the first predefined distance is lesser than the second predefined distance (although equal or greater is possible since this is not required) and where during directed energy deposition, a standoff distance is maintained at a setpoint. Further, note that DTCP is computed based on wire speed to move a standoff control to a point where droplets meet the workpiece 118 rather than underneath at a leading tip of the electrode 108. Moreover, adequate logging to a log database where all raw measurements, layer height, corrections, control deviations, and drive actions are logged. Additionally, configuration management is designed where a directed energy deposition additive manufacturing system is capable to load control settings based on a preset requested by an RPD^{™} program.

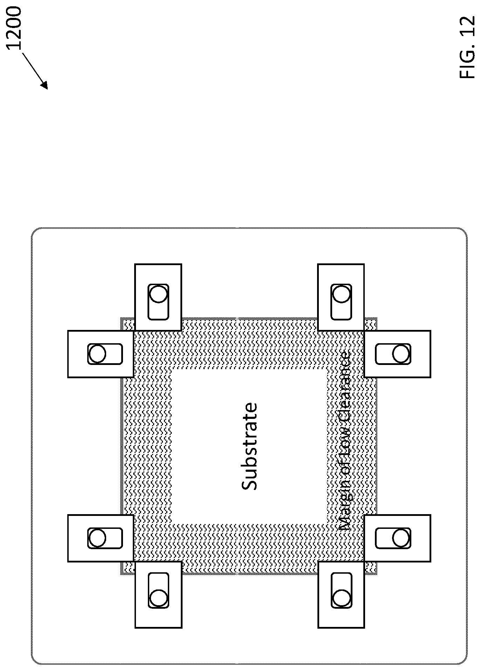

FIG. 12 shows an embodiment of a margin around a plurality of edges of a substrate where there an increased risk of collision with a tool head in accordance with this disclosure. In particular, a diagram 1200 shows an electrode center point position margin around edges of the substrate where there is a high risk of tool head collision (e.g. clearance inclusively less than about 10, 9, 8, 7, 6, 5, 4, 3, 2, 1 millimeters, non-damaged clamps with no spatter).

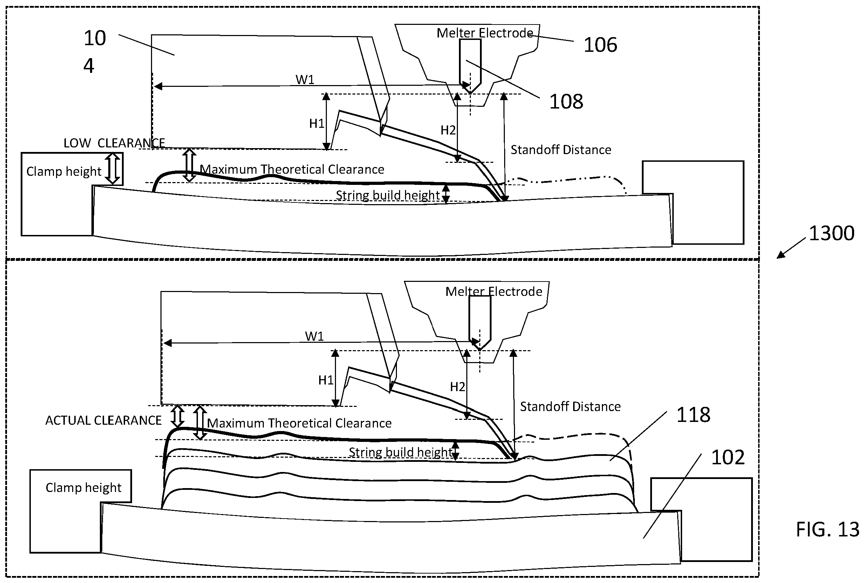

FIG. 13 shows an embodiment of a technique for minimizing or avoiding a collision with a clamp clamping a substrate in accordance with this disclosure. In particular, a diagram 1300 shows important geometries that need to be considered for avoiding collision during active control. Actual clearance (limit for lower correction) will be less in reality due to string height variations. Further, the diagram 1300 shows consideration of substrate clamps during standoff control (e.g. different geometries define lower correction limits depending on standoff setpoint to avoid collisions). For example, when some measurements are such that the standoff distance control would risk the tool head collision with the clamps, the logic controller 214 system can limit downward control motion to avoid the collision.

In one mode of operation, a directed energy deposition (e.g. RPD^{™}) additive manufacturing system can be configured for: frame rate and filtering (e.g. measurements are made at 1-10000frames per second, uses HDR function and pre-filtering to reduce reflections and stray light from plasma arcs or energy sources), flexible measurement modes (e.g. highest, lowest, average standoff around or less than about (+/- 10mm) center of laser pattern 114), measurement validation (e.g. difference between highest and lowest z, as well as slope used to validate measurements), flexible control modes (e.g. start no-control, string start based, or full control to standoff setpoint (per string), dynamic adjustments (e.g. slow for small errors, fast for sharp or larger errors), dynamic correction limits (e.g. correction limits are calculated and applied dynamically are used to prevent collisions, and to avoid too much correction, both per string as well as total per part), dynamic ramp Control (e.g. dynamic ramps are used to enable smooth corrections, avoid vibrations, sudden motion), operator override (e.g. operators have control for system override at any time to prevent machine damage), accurate or consistent inter-pass temperature measurements (e.g. standoff can be set to first preset distance no matter what string standoff might be just for T1 and second preset distance for T3 while during deposit standoff is maintained at the setpoint), DTCP (e.g. computed based on wire speed to move standoff distance control to point where droplets meet workpiece rather than under electrode tip), adequate logging to data log servers (e.g. some, most, or all raw measurements, layer height, corrections, and drive actions are logged), or configuration management (e.g. load control settings based on preset requested by program).

In one mode of operation, a directed energy deposition additive manufacturing system 100 includes the controller 119, the LLS 112, the substrate 102, the directed energy source 106, an additive manufacturing material (e.g. wire source 104), and a mover. The controller 119 is coupled to the LLS 112, the directed energy source 106, and the mover. The substrate 102 is movable in a 3-dimensional space relative to the LLS 112. The directed energy source 106 is movable along the vertical axis relative to the substrate 102. The mover is coupled to the directed energy source 106. The mover moves the directed energy source 106 along the vertical axis. The directed energy source 106 generates an energy and the energy melts the additive manufacturing material onto the substrate 102 such that the workpiece 118 is additively manufactured on the substrate 102 as the substrate 102 is moved in the 3-dimensional space relative to the directed energy source 106 and the LLS 112 toward the LLS 112. The workpiece 118 has a geometric profile and the directed energy source 106 is vertically spaced apart from the workpiece 118 such that a standoff distance is defined. The LLS 112 monitors the geometric profile of the workpiece 118 while the substrate 102 is moving in the 3-dimensional space such that the controller 119 controls the mover to move the directed energy source 106 along the vertical axis in order to maintain the standoff distance. The controller 119 can control the mover to move the directed energy source 108 along the vertical axis in order to maintain the standoff distance based on how fast the substrate 102 is moving in the 3-dimensional space. The controller 119 can control the mover to move the directed energy source 106 along the vertical axis in order to maintain the standoff distance based on how fast the additive manufacturing material is being melted via the plasma arc generated via the directed energy source 106. The directed energy source 106 includes a central tip portion and the controller can control the mover to move the directed energy source 106 along the vertical axis in order to maintain the standoff distance based on how fast the additive manufacturing material is being fed (e.g. via wire source 104) such that a droplet resulting from the additive manufacturing material being melted meets the workpiece 118 before the drop is positioned underneath the central tip portion of the electrode 108. The controller 119 can be programmed to request the mover to smoothly move the directed energy source 106 along the vertical axis in order to minimize a vibration of the directed energy source 106 while the directed energy source 106 is moving along the vertical axis. The controller 119 can be programmed to request the mover to smoothly move the directed energy source 106 along the vertical axis in order to minimize a sudden motion of the directed energy source 106 while the directed energy source 106 is moving along the vertical axis. The controller 119 can be programmed to request the mover to move the directed energy source 106 along the vertical axis in order to avoid a collision with an object engaging the substrate where the object is other than the workpiece 118. The object can be a clamp clamping the substrate. The controller 119 can be programmed to limit movement of the directed energy source 106 along the vertical axis on a per bead basis. The controller 119 can be programmed to limit movement of the directed energy source 106 along the vertical axis on a per workpiece basis. The controller 119 can be programmed to dynamically adjust movement of the directed energy source 106 along the vertical axis based on an error type. The LLS 112 generates a plurality of readings and the controller 119 can be programmed to receive the readings from the LLS 112 and to validate the readings before the controller requests the mover to move the directed energy source 106 along the vertical axis. The directed energy source 106 can generate a plasma arc to melt the additive manufacturing material. The LLS 112 can generate a plurality of readings. The workpiece 118 can generate a reflection and the controller can be programmed to apply at least one of a HDR or a pre-filtering technique to the readings from the LLS 112 in order to reduce at least one of the reflection or a stray light resulting from at least one of the workpiece 118 or the plasma arc. The directed energy source 106 can be a first directed energy source and the directed energy source 110 can preheat the substrate 102, where the directed energy source 110 is positioned between the LLS 112 and the directed energy source 106 along the horizontal axis. The controller 119 can control the mover to move the directed energy source 106 along the vertical axis in order to maintain the standoff distance based on the substrate 102 being distorted, warped, or deformed along the horizontal or vertical axis, whether longitudinally or laterally. The controller 119 can control the mover to move the directed energy source 106 along the vertical axis in order to maintain the standoff distance based on at least one of a feature of the workpiece 118, a joint of the workpiece 118, an intersection of the workpiece 118, an uneven height step, an uneven string surface, or a distortion of the substrate 102. A sensor (e.g. IMS 514) can monitor the mover. The controller can be coupled to the sensor and the controller controls the mover to move the directed energy source 106 along the vertical axis in order to maintain the standoff distance based on the sensor.

Various embodiments of this disclosure can be implemented in a data processing system suitable for storing and/or executing program code that includes at least one processor coupled directly or indirectly to memory elements through a system bus. The memory elements include, for instance, local memory employed during actual execution of the program code, bulk storage, and cache memory which provide temporary storage of at least some program code in order to reduce the number of times code must be retrieved from bulk storage during execution.

I/O devices (including, but not limited to, keyboards, displays, pointing devices, DASD, tape, CDs, DVDs, thumb drives and other memory media, etc.) can be coupled to the system either directly or through intervening I/O controllers. Network adapters can also be coupled to the system to enable the data processing system to become coupled to other data processing systems or remote printers or storage devices through intervening private or public networks. Modems, cable modems, and Ethernet cards are just a few of the available types of network adapters.

This disclosure can be embodied in a system, a method, and/or a computer program product. The computer program product can include a computer readable storage medium (or media) having computer readable program instructions thereon for causing a processor to carry out aspects of the present disclosure. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure can be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. A code segment or machine-executable instructions can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted via any suitable means including memory sharing, message passing, token passing, network transmission, among others. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a LAN or a WAN, or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of this disclosure.

Aspects of this disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions. The various illustrative logical blocks, modules, circuits, and algorithm steps described in connection with the embodiments disclosed herein can be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans can implement the described functionality in varying ways for each particular application, but such implementation decisions should not be interpreted as causing a departure from the scope of this disclosure.

The flowchart and block diagrams in the Figures illustrate the architecture, functionality, and operation of possible implementations of systems, methods, and computer program products according to various embodiments of the present disclosure. In this regard, each block in the flowchart or block diagrams can represent a module, segment, or portion of instructions, which comprises one or more executable instructions for implementing the specified logical function(s). In some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Words such as "then," "next," etc. are not intended to limit the order of the steps; these words are simply used to guide a reader through the description of the methods. Although process flow diagrams can describe the operations as a sequential process, many of the operations can be performed in parallel or concurrently. In addition, the order of the operations can be re-arranged. A process can correspond to a method, a function, a procedure, a subroutine, a subprogram, etc. When a process corresponds to a function, its termination can correspond to a return of the function to the calling function or the main function.

Features or functionality described with respect to certain embodiments can be combined and sub-combined in and/or with various other embodiments. Also, different aspects and/or elements of embodiments, as disclosed herein, can be combined and sub-combined in a similar manner as well. Further, some embodiments, whether individually and/or collectively, can be components of a larger system, wherein other procedures can take precedence over and/or otherwise modify their application. Additionally, a number of steps can be required before, after, and/or concurrently with embodiments, as disclosed herein. Note that any and/or all methods and/or processes, at least as disclosed herein, can be at least partially performed via at least one entity or actor in any manner.

The terminology used herein can imply direct or indirect, full or partial, temporary or permanent, action or inaction. For example, when an element is referred to as being "on," "connected" or "coupled" to another element, then the element can be directly on, connected or coupled to the other element and/or intervening elements can be present, including indirect and/or direct variants. In contrast, when an element is referred to as being "directly connected" or "directly coupled" to another element, there are no intervening elements present.

Although the terms first, second, etc. can be used herein to describe various elements, components, regions, layers and/or sections, these elements, components, regions, layers and/or sections should not necessarily be limited by such terms. These terms are used to distinguish one element, component, region, layer or section from another element, component, region, layer or section. Thus, a first element, component, region, layer, or section discussed below could be termed a second element, component, region, layer, or section without departing from the teachings of this disclosure.

The terminology used herein is for describing particular embodiments and is not intended to be necessarily limiting of this disclosure. As used herein, the singular forms "a," "an" and "the" are intended to include the plural forms as well, unless the context clearly indicates otherwise. Also, as used herein, the term "a" and/or "an" shall mean "one or more," even though the phrase "one or more" is also used herein. The terms "comprises," "includes" and/or "comprising," "including" when used in this specification, specify the presence of stated features, integers, steps, operations, elements, and/or components, but do not preclude the presence and/or addition of one or more other features, integers, steps, operations, elements, components, and/or groups thereof. Furthermore, when this disclosure states herein that something is "based on" something else, then such statement refers to a basis which can be based on one or more other things as well. In other words, unless expressly indicated otherwise, as used herein "based on" inclusively means "based at least in part on" or "based at least partially on."

As used herein, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances.

Unless otherwise defined, all terms (including technical and scientific terms) used herein have same meaning as commonly understood by one of ordinary skill in the art to which this disclosure belongs. The terms, such as those defined in commonly used dictionaries, should be interpreted as having a meaning that is consistent with their meaning in the context of the relevant art and should not be interpreted in an idealized and/or overly formal sense unless expressly so defined herein.

As used herein, the term "about" and/or "substantially" refers to a +/- 10% variation from the nominal value/term. Such variation is always included in any given.

If any disclosures are incorporated herein by reference and such disclosures conflict in part and/or in whole with this disclosure, then to an extent of conflict, and/or broader disclosure, and/or broader definition of terms, this disclosure controls. If such disclosures conflict in part and/or in whole with one another, then to an extent of conflict, the later-dated disclosure controls.

It will be apparent to skilled artisans that various modifications and variation can be made in this disclosure without departing from the scope of the appended claims.

## Claims

1. A directed energy deposition additive manufacturing system (100) comprising:
a standoff distance measurement unit (112),
a substrate (102),
a plasma torch (106),
a feed unit (104),
a material, and
a mover,
a controller (119) comprising a logic,
wherein the logic causes the feed unit (104) to output the material and the plasma torch (106) to output a plasma such that the plasma melts the material onto the substrate (102) and a workpiece (118) is thereby additively manufactured on the substrate (102),
wherein the workpiece (118) has a geometric profile, wherein the plasma torch (106) is vertically spaced apart from the workpiece (118) such that a standoff distance is defined,
**characterised in that**
the logic causes the standoff distance measurement unit (112) to monitor the geometric profile while the workpiece (18) is being additively manufactured such that the logic causes the mover to move at least one of the plasma torch (106) relative to the substrate (102) or the substrate (102) relative to the plasma torch (106) in order to maintain the standoff distance, and
wherein the standoff distance measurement unit includes a laser source and a camera, wherein the logic causes the laser source to output a laser pattern onto the geometric profile such that a plurality of reflections are generated, wherein the logic causes the camera to read the reflections, wherein the standoff distance measurement unit monitors the geometric profile based on the reflections.

2. The directed energy deposition additive manufacturing system of claim 1, wherein the mover is configured to move the plasma torch relative to the substrate in order to maintain the standoff distance based on the standoff distance measurement unit monitoring the geometric profile, and wherein the substrate is moved at least one of longitudinally or laterally relative to the torch.

3. The directed energy deposition additive manufacturing system of claim 1, wherein the substrate is not a workpiece.

4. The directed energy deposition additive manufacturing system of claim 1, wherein the geometric profile has a maximum height and a minimum height, wherein the standoff distance measurement unit monitors the geometric profile based on the maximum height and the minimum height.

5. The directed energy deposition additive manufacturing system of claim 1, wherein the system is configured to maintain the standoff distance based on a standoff set point accessed via the logic.

6. The directed energy deposition additive manufacturing system of claim 1, further comprising a user interface enabled to override the logic regarding control of at least one of the standoff distance measurement unit, the substrate, the plasma torch, the feed unit, or the mover.

7. The directed energy deposition additive manufacturing system of claim 1, wherein the logic reads a control input from a deposition specification and an input from a user interface, wherein the deposition specification and the input are associated with the workpiece.

8. The directed energy deposition additive manufacturing system of claim 1, wherein the logic controls the mover to enable a deposition and a measurement scan, wherein the deposition and the measurement scan are associated with the workpiece.

9. The directed energy deposition additive manufacturing system of claim 1, wherein the standoff distance measurement unit is configured to scan at least one of the workpiece or the substrate, determines the standoff distance, and inputs the standoff distance to the logic on demand.

10. The directed energy deposition additive manufacturing system of claim 1, wherein the standoff distance measurement unit is configured to determine a feature of the workpiece, wherein the standoff distance is determined based on the feature, and wherein the feature is at least one of a shape of the workpiece, a gap in the workpiece, or an angle of the workpiece.

11. The directed energy deposition additive manufacturing system of claim 1, wherein the logic performs a validation of a set of measurements, a sampling of the set of measurements based on the validation to a preset spatial resolution, an availment of the set of measurements to a workpiece coordinate system based on a grid spacing.

12. The directed energy deposition additive manufacturing system of claim 1, wherein the controller runs a feedback control logic to maintain the standoff distance.

13. The directed energy deposition additive manufacturing system of claim 1, further comprising;
a positioning unit,
wherein the logic is programmed to avoid at least one of a vibration or a jerky movement of the positioning unit.

14. The directed energy deposition additive manufacturing system of claim 1, wherein the logic is programmed to control at least one of an inert gas flow, a welding current, a temperature, a loading of the workpiece, an unloading of the workpiece, a loading of a wire spool, or an unloading of the wire spool.

15. The directed energy deposition additive manufacturing system of claim 1, wherein the mover is at least one of a motor, an engine, an actuator, a mechanical linkage, a gear mechanism, a pulley mechanism, a hydraulic mechanism, or a pneumatic mechanism.

16. The directed energy deposition additive manufacturing system of claim 1, wherein the plasma torch includes a central tip portion, wherein the controller controls the mover to vertically move the plasma torch in order to maintain the standoff distance based on how fast the material is being fed via a wire source such that a droplet resulting from the material being melted meets the workpiece before the drop is positioned underneath the central tip portion.

17. The directed energy deposition additive manufacturing system of claim 1, further comprising an object other than the workpiece engaging the substrate,
wherein the controller is programmed to request the mover to vertically move the plasma torch in order to avoid a collision with the object.

18. The directed energy deposition additive manufacturing system of claim 1, wherein the controller is programmed to limit vertical movement of the plasma torch based on a bead profile.

19. The directed energy deposition additive manufacturing system of claim 1, wherein the controller is programmed to dynamically adjust vertical movement of the plasma torch based on an error generated from a validation of a standoff distance deviation value.

20. The directed energy deposition additive manufacturing system of claim 1, wherein the standoff distance measurement unit is configured to generate a plurality of readings, wherein the controller is programmed to receive the readings from the standoff distance measurement unit and to validate the readings before the controller requests the mover to vertically move the plasma torch.

21. The directed energy deposition additive manufacturing system of claim 1, wherein the standoff distance measurement unit is configured to generate a plurality of readings, wherein the workpiece generates a reflection from the plasma, wherein the controller is programmed to apply at least one of a high dynamic range (HDR) or a pre-filtering technique to the readings in order to reduce at least one of the reflection or a stray light resulting from at least one of the workpiece or the plasma.

22. The directed energy deposition additive manufacturing system of claim 1, wherein the plasma plasma torch is a first plasma torch, and further comprising a second plasma torch for preheating the substrate, wherein the second plasma torch is positioned between the standoff distance measurement unit and the first plasma torch.

23. The directed energy deposition additive manufacturing system of claim 1, wherein the controller controls the mover to vertically move the plasma torch in order to maintain the standoff distance based on the substrate being at least one of longitudinally or laterally at least one of distorted, warped, or deformed.

24. The directed energy deposition additive manufacturing system of claim 1, wherein the controller controls the mover to vertically move the plasma torch in order to maintain the standoff distance based on at least one of a feature of the workpiece, a joint of the workpiece, an intersection of the workpiece, an uneven height step, an uneven string surface, or at least one of a distortion, warping, or deformation of the substrate.

25. The directed energy deposition additive manufacturing system of claim 1, further comprising a sensor monitoring the mover, wherein the logic is coupled to the sensor, wherein the logic controls the mover to vertically move the plasma torch in order to maintain the standoff distance based on the sensor.

26. A method for additive manufacturing, **characterized in that** the method comprises:
applying the system (100) according to any one of claims 1-25;
outputting a material;
outputting a plasma via a plasma torch (106);
melting the material via the plasma such that a workpiece (118) is additively manufactured on a substrate (102), wherein the workpiece (118) has a geometric profile, wherein the plasma torch (106) is vertically spaced apart from the workpiece such that a standoff distance is defined;
monitoring the geometric profile while the workpiece (118) is being additively manufactured such that a mover moves at least one of the plasma torch (106) relative to the substrate (102) or the substrate (102) relative to the plasma torch (106) in order to maintain the standoff distance.

## Patentansprüche

1. Generatives Fertigungssystem mit gerichteter Energieablagerung (100), umfassend:
eine Abstandsmesseinheit (112),
ein Substrat (102),
einen Plasmabrenner (106),
eine Zufuhreinheit (104),
ein Material und
einen Beweger,
eine Steuerung (119), die eine Logik umfasst,
wobei die Logik bewirkt, dass die Zufuhreinheit (104) das Material ausgibt und der Plasmabrenner (106) ein Plasma ausgibt, sodass das Plasma das Material auf das Substrat (102) schmilzt und ein Werkstück (118) dadurch auf dem Substrat (102) generativ gefertigt wird,
wobei das Werkstück (118) ein geometrisches Profil aufweist, wobei der Plasmabrenner (106) vertikal von dem Werkstück (118) beabstandet ist, sodass ein Abstand definiert ist,
**dadurch gekennzeichnet, dass** die Logik bewirkt, dass die Abstandsmesseinheit (112) das geometrische Profil überwacht, während das Werkstück (18) generativ gefertigt wird, sodass die Logik bewirkt, dass der Beweger zumindest eines von dem Plasmabrenner (106) relativ zu dem Substrat (102) oder dem Substrat (102) relativ zu dem Plasmabrenner (106) bewegt, um den Abstand zu halten, und
wobei die Abstandsmesseinheit eine Laserquelle und eine Kamera beinhaltet, wobei die Logik bewirkt, dass die Laserquelle ein Lasermuster auf das geometrische Profil ausgibt, sodass eine Vielzahl von Reflexionen erzeugt wird, wobei die Logik bewirkt, dass die Kamera die Reflexionen liest, wobei die Abstandsmesseinheit das geometrische Profil basierend auf den Reflexionen überwacht.

2. Generatives Fertigungssystem mit gerichteter Energieablagerung nach Anspruch 1, wobei der Beweger dazu konfiguriert ist, den Plasmabrenner relativ zu dem Substrat zu bewegen, um den Abstand basierend auf der Abstandsmesseinheit, die das geometrische Profil überwacht, zu halten, und wobei das Substrat zumindest eines von längs oder seitlich relativ zu dem Brenner bewegt wird.

3. Generatives Fertigungssystem mit gerichteter Energieablagerung nach Anspruch 1, wobei das Substrat kein Werkstück ist.

4. Generatives Fertigungssystem mit gerichteter Energieablagerung nach Anspruch 1, wobei das geometrische Profil eine maximale Höhe und eine minimale Höhe aufweist, wobei die Abstandsmesseinheit das geometrische Profil basierend auf der maximalen Höhe und der minimalen Höhe überwacht.

5. Generatives Fertigungssystem mit gerichteter Energieablagerung nach Anspruch 1, wobei das System dazu konfiguriert ist, den Abstand basierend auf einem Abstandssollwert, auf den über die Logik zugegriffen wird, zu halten.

6. Generatives Fertigungssystem mit gerichteter Energieablagerung nach Anspruch 1, ferner umfassend eine Benutzerschnittstelle, die aktiviert ist, um die Logik bezüglich Steuerung von zumindest einem von der Abstandsmesseinheit, dem Substrat, dem Plasmabrenner, der Zufuhreinheit oder dem Beweger zu überschreiben.

7. Generatives Fertigungssystem mit gerichteter Energieablagerung nach Anspruch 1, wobei die Logik eine Steuereingabe von einer Ablagerungsspezifikation und eine Eingabe von einer Benutzerschnittstelle liest, wobei die Ablagerungsspezifikation und die Eingabe mit dem Werkstück assoziiert sind.

8. Generatives Fertigungssystem mit gerichteter Energieablagerung nach Anspruch 1, wobei die Logik den Beweger steuert, um eine Ablagerung und eine Messabtastung zu ermöglichen, wobei die Ablagerung und die Messabtastung mit dem Werkstück assoziiert sind.

9. Generatives Fertigungssystem mit gerichteter Energieablagerung nach Anspruch 1, wobei die Abstandsmesseinheit dazu konfiguriert ist, zumindest eines von dem Werkstück oder dem Substrat abzutasten, den Abstand bestimmt und den Abstand in die Logik bei Bedarf eingibt.

10. Generatives Fertigungssystem mit gerichteter Energieablagerung nach Anspruch 1, wobei die Abstandsmesseinheit dazu konfiguriert ist, ein Merkmal des Werkstücks zu bestimmen, wobei der Abstand basierend auf dem Merkmal bestimmt wird und wobei das Merkmal zumindest eines von einer Form des Werkstücks, einem Spalt in dem Werkstück oder einem Winkel des Werkstücks ist.

11. Generatives Fertigungssystem mit gerichteter Energieablagerung nach Anspruch 1, wobei die Logik eine Validierung eines Satzes von Messungen, eine Probenahme des Satzes von Messungen basierend auf der Validierung zu einer voreingestellten räumlichen Auflösung, eine Inanspruchnahme des Satzes von Messungen zu einem Werkstückkoordinatensystem basierend auf einem Rasterabstand durchführt.

12. Generatives Fertigungssystem mit gerichteter Energieablagerung nach Anspruch 1, wobei die Steuerung eine Rückkopplungssteuerlogik laufen lässt, um den Abstand zu halten.

13. Generatives Fertigungssystem mit gerichteter Energieablagerung nach Anspruch 1, ferner umfassend;
eine Positionierungseinheit,
wobei die Logik dazu programmiert ist, zumindest eines von einer Vibration oder einer ruckartigen Bewegung der Positionierungseinheit zu vermeiden.

14. Generatives Fertigungssystem mit gerichteter Energieablagerung nach Anspruch 1, wobei die Logik dazu programmiert ist, zumindest eines von einem Inertgasfluss, einem Schweißstrom, einer Temperatur, einer Beladung des Werkstücks, einer Entladung des Werkstücks, einer Beladung einer Drahtspule oder einer Entladung der Drahtspule zu steuern.

15. Generatives Fertigungssystem mit gerichteter Energieablagerung nach Anspruch 1, wobei der Beweger zumindest eines von einem Motor, einem Triebwerk, einem Aktor, einem mechanischen Gestänge, einem Getriebemechanismus, einem Riemenscheibenmechanismus, einem hydraulischen Mechanismus oder einem pneumatischen Mechanismus ist.

16. Generatives Fertigungssystem mit gerichteter Energieablagerung nach Anspruch 1, wobei der Plasmabrenner einen zentralen Spitzenabschnitt beinhaltet, wobei die Steuerung den Beweger steuert, um den Plasmabrenner vertikal zu bewegen, um den Abstand basierend darauf, wie schnell das Material über eine Drahtquelle zugeführt wird, zu halten, sodass ein Tröpfchen resultierend aus dem geschmolzenen Material auf das Werkstück trifft, bevor der Tropfen unter dem zentralen Spitzenabschnitt positioniert ist.

17. Generatives Fertigungssystem mit gerichteter Energieablagerung nach Anspruch 1, ferner umfassend ein anderes Objekt als das Werkstück, das in das Substrat eingreift,
wobei die Steuerung dazu programmiert ist, den Beweger aufzufordern, den Plasmabrenner vertikal zu bewegen, um eine Kollision mit dem Objekt zu vermeiden.

18. Generatives Fertigungssystem mit gerichteter Energieablagerung nach Anspruch 1, wobei die Steuerung dazu programmiert ist, vertikale Bewegung des Plasmabrenners basierend auf einem Wulstprofil zu begrenzen.

19. Generatives Fertigungssystem mit gerichteter Energieablagerung nach Anspruch 1, wobei die Steuerung dazu programmiert ist, vertikale Bewegung des Plasmabrenners basierend auf einem Fehler, der aus einer Validierung eines Abstandsabweichungswertes erzeugt wird, dynamisch anzupassen.

20. Generatives Fertigungssystem mit gerichteter Energieablagerung nach Anspruch 1, wobei die Abstandsmesseinheit dazu konfiguriert ist, eine Vielzahl von Ablesungen zu erzeugen, wobei die Steuerung dazu programmiert ist, die Ablesungen von der Abstandsmesseinheit zu empfangen und die Ablesungen zu validieren, bevor die Steuerung den Beweger auffordert, den Plasmabrenner vertikal zu bewegen.

21. Generatives Fertigungssystem mit gerichteter Energieablagerung nach Anspruch 1, wobei die Abstandsmesseinheit dazu konfiguriert ist, eine Vielzahl von Ablesungen zu erzeugen, wobei das Werkstück eine Reflexion von dem Plasma erzeugt, wobei die Steuerung dazu programmiert ist, zumindest eines von einem hohen Dynamikbereich (HDR) oder einer Vorfiltertechnik auf die Ablesungen anzuwenden, um zumindest eines von der Reflexion oder einem Streulicht, das aus zumindest einem von dem Werkstück oder dem Plasma resultiert, zu reduzieren.

22. Generatives Fertigungssystem mit gerichteter Energieablagerung nach Anspruch 1, wobei der Plasmabrenner ein erster Plasmabrenner ist und ferner umfassend einen zweiten Plasmabrenner zum Vorwärmen des Substrats, wobei der zweite Plasmabrenner zwischen der Abstandsmesseinheit und dem ersten Plasmabrenner positioniert ist.

23. Generatives Fertigungssystem mit gerichteter Energieablagerung nach Anspruch 1, wobei die Steuerung den Beweger steuert, um den Plasmabrenner vertikal zu bewegen, um den Abstand basierend darauf, dass das Substrat zumindest eines von längs oder seitlich zumindest eines von verzerrt, verformt oder deformiert ist, zu halten.

24. Generatives Fertigungssystem mit gerichteter Energieablagerung nach Anspruch 1, wobei die Steuerung den Beweger steuert, um den Plasmabrenner vertikal zu bewegen, um den Abstand basierend auf zumindest einem von einem Merkmal des Werkstücks, einer Verbindung des Werkstücks, einem Schnittpunkt des Werkstücks, einer unebenen Höhenstufe, einer unebenen Strangoberfläche oder zumindest einem von einer Verzerrung, Verformung oder Deformierung des Substrats zu halten.

25. Generatives Fertigungssystem mit gerichteter Energieablagerung nach Anspruch 1, ferner umfassend einen Sensor, der den Beweger überwacht, wobei die Logik an den Sensor gekoppelt ist, wobei die Logik den Beweger steuert, um den Plasmabrenner vertikal zu bewegen, um den Abstand basierend auf dem Sensor zu halten.

26. Verfahren zur generativen Fertigung, **dadurch gekennzeichnet, dass** das Verfahren Folgendes umfasst:
Anwenden des Systems (100) nach einem der Ansprüche 1-25;
Ausgeben eines Materials;
Ausgeben eines Plasmas über einen Plasmabrenner (106);
Schmelzen des Materials über das Plasma, sodass ein Werkstück (118) auf einem Substrat (102) generativ gefertigt wird, wobei das Werkstück (118) ein geometrisches Profil aufweist, wobei der Plasmabrenner (106) vertikal von dem Werkstück beabstandet ist, sodass ein Abstand definiert ist;
Überwachen des geometrischen Profils, während das Werkstück (118) generativ gefertigt wird, sodass ein Beweger zumindest eines von dem Plasmabrenner (106) relativ zu dem Substrat (102) oder dem Substrat (102) relativ zu dem Plasmabrenner (106) bewegt, um den Abstand zu halten.

## Revendications

1. Système de fabrication additive par dépôt d'énergie dirigée (100) comprenant :
une unité de mesure de distance d'écartement (112),
un substrat (102),
une torche à plasma (106),
une unité d'alimentation (104),
un matériau, et
un dispositif de déplacement,
un dispositif de commande (119) comprenant une logique,
dans lequel la logique amène l'unité d'alimentation (104) à délivrer en sortie le matériau et la torche à plasma (106) à délivrer en sortie un plasma de sorte que le plasma fasse fondre le matériau sur le substrat (102) et qu'une pièce de travail (118) soit ainsi fabriquée de manière additive sur le substrat (102),
dans lequel la pièce de travail (118) présente un profil géométrique, dans lequel la torche à plasma (106) est espacée verticalement de la pièce de travail (118) de sorte qu'une distance d'écartement est définie,
**caractérisé en ce que**
la logique amène l'unité de mesure de distance d'écartement (112) à surveiller le profil géométrique pendant que la pièce de travail (18) est fabriquée de manière additive de sorte que la logique amène le dispositif de déplacement à déplacer au moins l'un de la torche à plasma (106) par rapport au substrat (102) ou du substrat (102) par rapport à la torche à plasma (106) afin de maintenir la distance d'écartement, et
dans lequel l'unité de mesure de distance d'écartement comprend une source laser et une caméra, dans lequel la logique amène la source laser à délivrer en sortie un motif laser sur le profil géométrique de sorte qu'une pluralité de reflets sont générées, dans lequel la logique amène la caméra à lire les reflets, dans lequel l'unité de mesure de distance d'écartement surveille le profil géométrique sur la base des reflets.

2. Système de fabrication additive par dépôt d'énergie dirigée de la revendication 1, dans lequel le dispositif de déplacement est conçu pour déplacer la torche à plasma par rapport au substrat afin de maintenir la distance d'écartement sur la base du fait que l'unité de mesure de distance d'écartement surveille le profil géométrique, et dans lequel le substrat est déplacé au moins longitudinalement ou latéralement par rapport à la torche.

3. Système de fabrication additive par dépôt d'énergie dirigée de la revendication 1, dans lequel le substrat n'est pas une pièce de travail.

4. Système de fabrication additive par dépôt d'énergie dirigée de la revendication 1, dans lequel le profil géométrique présente une hauteur maximale et une hauteur minimale, dans lequel l'unité de mesure de distance d'écartement surveille le profil géométrique sur la base de la hauteur maximale et de la hauteur minimale.

5. Système de fabrication additive par dépôt d'énergie dirigée de la revendication 1, dans lequel le système est conçu pour maintenir la distance d'écartement sur la base d'un point de consigne d'écartement accessible par l'intermédiaire de la logique.

6. Système de fabrication additive par dépôt d'énergie dirigée de la revendication 1, comprenant en outre une interface utilisateur activée pour outrepasser la logique concernant la commande d'au moins l'une de l'unité de mesure de distance d'écartement, du substrat, de la torche à plasma, de l'unité d'alimentation ou du dispositif de déplacement.

7. Système de fabrication additive par dépôt d'énergie dirigée de la revendication 1, dans lequel la logique lit une saisie de commande à partir d'une spécification de dépôt et une saisie à partir d'une interface utilisateur, dans lequel la spécification de dépôt et la saisie sont associées à la pièce de travail.

8. Système de fabrication additive par dépôt d'énergie dirigée de la revendication 1, dans lequel la logique commande le dispositif de déplacement pour permettre un dépôt et un balayage de mesure, dans lequel le dépôt et le balayage de mesure sont associés à la pièce de travail.

9. Système de fabrication additive par dépôt d'énergie dirigée de la revendication 1, dans lequel l'unité de mesure de distance d'écartement est conçue pour balayer au moins l'un de la pièce de travail ou du substrat, détermine la distance d'écartement et saisit la distance d'écartement dans la logique à la demande.

10. Système de fabrication additive par dépôt d'énergie dirigée de la revendication 1, dans lequel l'unité de mesure de distance d'écartement est conçue pour déterminer une caractéristique de la pièce de travail, dans lequel la distance d'écartement est déterminée sur la base de la caractéristique, et dans lequel la caractéristique est au moins l'une d'une forme de la pièce de travail, d'un interstice dans la pièce de travail ou d'un angle de la pièce de travail.

11. Système de fabrication additive par dépôt d'énergie dirigée de la revendication 1, dans lequel la logique réalise une validation d'un ensemble de mesures, un échantillonnage de l'ensemble de mesures sur la base de la validation à une résolution spatiale prédéfinie, une mise à disposition de l'ensemble de mesures à un système de coordonnées de pièce de travail sur la base d'un espacement de grille.

12. Système de fabrication additive par dépôt d'énergie dirigée de la revendication 1, dans lequel le dispositif de commande exécute une logique de commande par rétroaction pour maintenir la distance d'écartement.

13. Système de fabrication additive par dépôt d'énergie dirigée de la revendication 1, comprenant en outre ;
une unité de positionnement,
dans lequel la logique est programmée pour éviter au moins l'un d'une vibration ou d'un mouvement saccadé de l'unité de positionnement.

14. Système de fabrication additive par dépôt d'énergie dirigée de la revendication 1, dans lequel la logique est programmée pour commander au moins l'un d'un flux de gaz inerte, d'un courant de soudure, d'une température, d'un chargement de la pièce de travail, d'un déchargement de la pièce de travail, d'un chargement d'une bobine de fil ou d'un déchargement de la bobine de fil.

15. Système de fabrication additive par dépôt d'énergie dirigée de la revendication 1, dans lequel le dispositif de déplacement est au moins l'un d'un dispositif moteur, d'un moteur, d'un actionneur, d'une liaison mécanique, d'un mécanisme d'engrenage, d'un mécanisme de poulie, d'un mécanisme hydraulique ou d'un mécanisme pneumatique.

16. Système de fabrication additive par dépôt d'énergie dirigée de la revendication 1, dans lequel la torche à plasma comprend une partie d'extrémité centrale, dans lequel le dispositif de commande commande au dispositif de déplacement de déplacer verticalement la torche à plasma afin de maintenir la distance d'écartement sur la base de la vitesse à laquelle le matériau est alimenté par l'intermédiaire d'une source de fil de sorte qu'une gouttelette résultant de la fusion du matériau rencontre la pièce de travail avant que la goutte ne soit positionnée sous la partie d'extrémité centrale.

17. Système de fabrication additive par dépôt d'énergie dirigée de la revendication 1, comprenant en outre un objet autre que la pièce de travail en prise avec le substrat, dans lequel le dispositif de commande est programmé pour demander au dispositif de déplacement de déplacer verticalement la torche à plasma afin d'éviter une collision avec l'objet.

18. Système de fabrication additive par dépôt d'énergie dirigée de la revendication 1, dans lequel le dispositif de commande est programmé pour limiter un mouvement vertical de la torche à plasma sur la base d'un profil de cordon.

19. Système de fabrication additive par dépôt d'énergie dirigée de la revendication 1, dans lequel le dispositif de commande est programmé pour ajuster dynamiquement un mouvement vertical de la torche à plasma sur la base d'une erreur générée à partir d'une validation d'une valeur de déviation de distance d'écartement.

20. Système de fabrication additive par dépôt d'énergie dirigée de la revendication 1, dans lequel l'unité de mesure de distance d'écartement est conçue pour générer une pluralité de lectures, dans lequel le dispositif de commande est programmé pour recevoir les lectures à partir de l'unité de mesure de distance d'écartement et pour valider les lectures avant que le dispositif de commande ne demande au dispositif de déplacement de déplacer verticalement la torche à plasma.

21. Système de fabrication additive par dépôt d'énergie dirigée de la revendication 1, dans lequel l'unité de mesure de distance d'écartement est conçue pour générer une pluralité de lectures, dans lequel la pièce de travail génère un reflet à partir du plasma, dans lequel le dispositif de commande est programmé pour appliquer au moins l'une d'une plage dynamique élevée (HDR) ou d'une technique de pré-filtrage aux lectures afin de réduire au moins l'un du reflet ou d'une lumière parasite résultant d'au moins l'une de la pièce de travail ou du plasma.

22. Système de fabrication additive par dépôt d'énergie dirigée de la revendication 1, dans lequel la torche à plasma est une première torche à plasma, et comprenant en outre une seconde torche à plasma pour préchauffer le substrat, dans lequel la seconde torche à plasma est positionnée entre l'unité de mesure de distance d'écartement et la première torche à plasma.

23. Système de fabrication additive par dépôt d'énergie dirigée de la revendication 1, dans lequel le dispositif de commande commande au dispositif de déplacement de déplacer verticalement la torche à plasma afin de maintenir la distance d'écartement sur la base du fait que le substrat est au moins longitudinalement ou latéralement au moins l'un de tordu, gauchi ou déformé.

24. Système de fabrication additive par dépôt d'énergie dirigée de la revendication 1, dans lequel le dispositif de commande commande au dispositif de déplacement de déplacer verticalement la torche à plasma afin de maintenir la distance d'écartement sur la base d'au moins une caractéristique de la pièce de travail, d'un joint de la pièce de travail, d'une intersection de la pièce de travail, d'un pas de hauteur inégal, d'une surface de chaîne inégale ou d'au moins l'un d'une torsion, d'un gauchissement ou d'une déformation du substrat.

25. Système de fabrication additive par dépôt d'énergie dirigée de la revendication 1, comprenant en outre un capteur surveillant le dispositif de déplacement, dans lequel la logique est couplée au capteur, dans lequel la logique commande au dispositif de déplacement de déplacer verticalement la torche à plasma afin de maintenir la distance d'écartement sur la base du capteur.

26. Procédé permettant la fabrication additive, **caractérisé en ce que** le procédé comprend :
l'application du système (100) selon l'une quelconque des revendications 1 à 25 ;
la délivrance en sortie d'un matériau ;
la délivrance en sortie d'un plasma par l'intermédiaire d'une torche à plasma (106) ;
la fusion du matériau par l'intermédiaire du plasma de sorte qu'une pièce de travail (118) est fabriquée de manière additive sur un substrat (102), dans lequel la pièce de travail (118) présente un profil géométrique, dans lequel la torche à plasma (106) est espacée verticalement de la pièce de travail de sorte qu'une distance d'écartement est définie ;
la surveillance du profil géométrique pendant que la pièce de travail (118) est fabriquée de manière additive de sorte qu'un dispositif de déplacement déplace au moins l'un de la torche à plasma (106) par rapport au substrat (102) ou du substrat (102) par rapport à la torche à plasma (106) afin de maintenir la distance d'écartement.
